(19) Europäisches Patentamt
European Patent Office
Office européen des brevets

(11) EP 4 726 802 A1

(12) **EUROPEAN PATENT APPLICATION**
published in accordance with Art. 153(4) EPC

(43) Date of publication:
**15.04.2026 Bulletin 2026/16**

(21) Application number: **24943949.8**

(22) Date of filing: **28.06.2024**

(51) International Patent Classification (IPC):
***H01M 4/133*** *(2010.01)* ***H01M 10/0525*** *(2010.01)*

(52) Cooperative Patent Classification (CPC):
**H01M 10/0567; H01M 4/133; H01M 4/134; H01M 4/136; H01M 4/364; H01M 4/366; H01M 4/386; H01M 4/483; H01M 4/5825; H01M 4/587; H01M 4/62; H01M 4/623; H01M 4/663; H01M 4/667; H01M 10/052;** (Cont.)

(86) International application number:
**PCT/CN2024/102539**

(87) International publication number:
**WO 2026/000364 (02.01.2026 Gazette 2026/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Contemporary Amperex Technology Co., Limited**
**Ningde, Fujian 352100 (CN)**

(72) Inventors:
- **NIU, Congsu**
  **Ningde, Fujian 352100 (CN)**
- **LI, Xiaowei**
  **Ningde, Fujian 352100 (CN)**

(74) Representative: **Lorenz Seidler Gossel Part. mbB**
**Widenmayerstr. 23**
**80538 München (DE)**

# (54) SECONDARY BATTERY AND ELECTRIC DEVICE

(57) The present application relates to a secondary battery and a power consuming apparatus. A negative electrode plate in the secondary battery includes a negative electrode current collector and a negative electrode film layer. The negative electrode film layer is disposed on at least one side of the negative electrode current collector. The negative electrode film layer includes a negative electrode active material. The negative electrode active material includes first graphite. A Dv50 particle size of the first graphite is 2.2 μm to 7.7 μm. An electrolyte solution includes an organic solvent and an organic additive. The organic solvent includes a first solvent. The first solvent includes cyclic carbonate. Based on a total mass of the organic solvent, a mass content of the first solvent is 25% to 40%. The organic additive includes a first additive and a second additive. The first additive includes vinylene carbonate. The second additive includes an ethylene carbonate derivative. Based on a total mass of the electrolyte solution, a mass percentage of the first additive in the electrolyte solution is 2% to 10%, and a mass percentage of the second additive in the electrolyte solution is 0.3% to 6%.

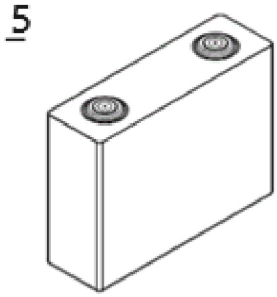

FIG. 1

EP 4 726 802 A1

(52) Cooperative Patent Classification (CPC): (Cont.)
**H01M 10/0525; H01M 10/0562; H01M 10/0568;**
**H01M 10/0569; H01M 50/431; H01M 50/449;**
H01M 2004/027; H01M 2004/028;
H01M 2300/0037; H01M 2300/0068; Y02E 60/10

## Description

### TECHNICAL FIELD

The present application relates to the technical field of batteries, and in particular to a secondary battery and a power consuming apparatus.

### BACKGROUND

The statement here only provides background information related to the present application and does not necessarily constitute the related art.

In recent years, with the rapid development of secondary batteries such as lithium-ion batteries, secondary batteries have been widely used in energy storage power systems such as hydraulic, thermal, wind, and solar power stations, as well as in a plurality of fields such as electric tools, electric bicycles, electric motorcycles, electric vehicles, military equipment, and aerospace. As the application range of secondary batteries becomes wider, requirements for fast charge performance of the secondary batteries gradually increase. However, it is currently difficult to achieve balance between fast charge performance and cycling performance. Therefore, how to enable secondary batteries to balance good fast charge performance and cycling performance becomes an urgent problem to be solved.

### SUMMARY

The present application provides a secondary battery and a power consuming apparatus, which have good fast charge performance, normal-temperature cycling performance, and high-temperature cycling performance.

A first aspect of the present application provides a secondary battery, including:

a positive electrode plate, the positive electrode plate including a positive electrode current collector and a positive electrode film layer, the positive electrode film layer being disposed on at least one side of the positive electrode current collector, and the positive electrode film layer including a positive electrode active material;

a negative electrode plate, the negative electrode plate including a negative electrode current collector and a negative electrode film layer, the negative electrode film layer being disposed on at least one side of the negative electrode current collector, the negative electrode film layer including a negative electrode active material, the negative electrode active material including first graphite, and a Dv50 particle size of the first graphite being 2.2 μm to 7.7 μm; and

an electrolyte solution, the electrolyte solution including an organic solvent and an organic additive, the organic solvent including a first solvent, the first solvent including cyclic carbonate, and based on a total mass of the organic solvent, a mass content of the first solvent being 25% to 40%; and the organic additive including a first additive and a second additive, the first additive including vinylene carbonate, the second additive including an ethylene carbonate derivative, and based on a total mass of the electrolyte solution, a mass percentage of the first additive in the electrolyte solution being 2% to 10%, and a mass percentage of the second additive in the electrolyte solution being 0.3% to 6%.

Therefore, the negative electrode active material of the above secondary battery includes the above first graphite having a small particle size, so the negative electrode plate containing the first graphite can improve fast charge performance of the battery. However, the graphite having a small particle size has many surface defects and high reactivity, and consumes the electrolyte solution at a high rate. In addition, in a fast charge situation, the temperature rise of the cell is high, and the stability of the electrolyte solution is affected, so it is difficult to improve the cycling performance of the battery. Therefore, by improving the first solvent, the first additive, and the second additive, and the contents thereof in the above electrolyte solution, the electrolyte solution has good heat stability, so that a stable interface film is formed on the surface of the negative electrode plate. As a result, the consumption rate of the electrolyte solution and the direct current internal resistance DCR of the battery can be reduced, thereby improving the cycling performance and the fast charge performance of the secondary battery. In this way, the above secondary battery can achieve balance among good fast charge performance, normal-temperature cycling performance, and high-temperature cycling performance.

In any implementation of the present application, a structure of the ethylene carbonate derivative is as follows:

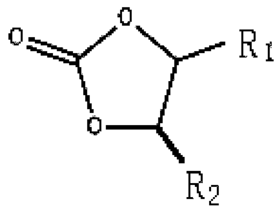

,

where $R_1$ and $R_2$ each independently include any one of hydrogen, halogen, C1-C5 alkyl, and C1-C5 haloalkyl, and $R_1$ and $R_2$ are not both hydrogen. These second additives have good film forming properties, electrical conduction properties, and stability, and can improve fast charge performance and cycling performance, especially normal-temperature cycling performance, of the battery.

In any implementation of the present application, the ethylene carbonate derivative includes at least one of fluoroethylene carbonate, difluoroethylene carbonate, and trifluoromethyl ethylene carbonate.

In any implementation of the present application, the cyclic carbonate includes at least one of ethylene carbonate and propylene carbonate.

In any implementation of the present application, based on the total mass of the organic solvent, the mass content of the first solvent is 30% to 40%. By controlling the mass content of the first solvent in the organic solvent to fall within this range, the battery can have better cycling performance.

In any implementation of the present application, based on the total mass of the electrolyte solution, a mass content of the first additive is 3% to 8%, and/or a mass content of the second additive is 1.5% to 5%. By controlling the mass content of the first additive and/or the second additive in the electrolyte solution to fall within the optional range, the battery can have better cycling performance.

In any implementation of the present application, a total mass content of the first additive and the second additive in the electrolyte solution is 3% to 12%, optionally 3.5% to 9%. By controlling the total mass of the first additive and the second additive to fall within the above range, the problem that the graphite having a small particle size has high activity and consumes the additive at a higher rate in the cycling process, causing dramatic drop in the cycling performance, can be further alleviated, thereby improving the cycling performance of the battery.

In any implementation of the present application, a mass of the electrolyte solution at unit battery rated capacity 1 Ah of the secondary battery is 2.2 g to 2.95 g.

In any implementation of the present application, the mass of the electrolyte solution at unit battery rated capacity 1 Ah of the secondary battery is 2.2 g to 2.65 g, and the total mass content of the first additive and the second additive in the electrolyte solution is 5% to 9%; or

the mass of the electrolyte solution at unit battery rated capacity 1 Ah of the secondary battery is > 2.65 g and ≤ 2.95 g, and the total mass content of the first additive and the second additive in the electrolyte solution is 3.5% to 6.5%.

In any implementation of the present application, a powder compaction density of the positive electrode active material at 30000 N is ≥ 2.43 $g/cm^3$, optionally 2.48 $g/cm^3$ to 2.85 $g/cm^3$.

In any implementation of the present application, the positive electrode active material includes at least one of lithium-containing phosphate with an olivine structure and derivatives thereof.

In any implementation of the present application, the positive electrode active material includes:

a core, including at least one of lithium-containing phosphate with an olivine structure and derivatives thereof; and

an ion conducting layer, the ion conducting layer coating a surface of the core, and the lithium ion conducting layer including at least one of Fe, C, Ti, Zr, Hf, Ge, and Sn.

The surface of the core is coated with the ion conducting layer, so that the conductivity of the lithium-containing phosphate with an olivine structure and the derivatives thereof can be improved, and the powder resistivity of the material can be reduced, which is beneficial to the migration rate of lithium ions, improves the fast charge capability of the battery, and reduces the heat generation of the battery cell.

In any implementation of the present application, the lithium-containing phosphate with an olivine structure and the derivatives thereof include compounds with a general formula $Li_{x1}Al_{y1}M1_{a1}M2_{b1}P_{1-c1}X_{c1}Q1_{z1}$. $0.5 \le x1 \le 1.3$, $0 \le y1 \le 1.3$, and $0.9 \le x1+y1 \le 1.3$. $0.9 \le a1 \le 1.5$, $0 \le b1 \le 0.5$, and $0.9 \le a1+b1 \le 1.5$. $0 \le c1 \le 0.5$. $3 \le z1 \le 5$. A1 includes at least one of Na, K, and Mg. M1 includes at least one of Mn, Fe, Co, and Ni. M2 includes at least one of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce. X includes at least one of S, Si, Cl, B, C, N, and P. Q1 includes at least one of O and F. The lithium-containing phosphate with an olivine structure has excellent cycling stability, which helps improve the cycling performance of the battery cell.

In any implementation of the present application, the lithium-containing phosphate with an olivine structure and the derivatives thereof include at least one of lithium iron phosphate, lithium manganese phosphate, lithium nickel phosphate, and lithium cobalt phosphate.

In any implementation of the present application, the ion conducting layer includes a fast ion conductor with a chemical formula $Li_{3-b}Fe_{2-b}M3_b(PO_m)_n$. M3 includes at least one of Ti, Zr, Hf, Ge, and Sn having a valency of +4. $0 \le b \le 1$, $3 \le m \le 5$, and $2 \le n \le 4$.

In any implementation of the present application, the fast ion conductor includes at least one of lithium iron titanium phosphate, lithium iron zirconium phosphate, and lithium iron tin phosphate. Coating the surface of the core with the fast ion conductor containing an NASICON structure can significantly improve the transfer rate of lithium ions during a plurality of lithium deintercalations/intercalations at the positive electrode terminal, improve the ion conductivity of the positive electrode active material, and improve the fast charge capability of the battery cell. In addition, the gravimetric capacity can be improved, and the energy density of the corresponding battery cell can be improved.

In any implementation of the present application, at least one of the following conditions is met:

(1) a compaction density of the positive electrode plate is 2.5 $g/cm^3$ to 2.8 $g/cm^3$;
(2) a mass percentage of carbon in the positive electrode active material is 1% to 2%;
(3) a powder resistivity range of the positive electrode active material is $R \le 20\ \Omega \bullet cm$, optionally $R \le 11\ \Omega \bullet cm$; and
(4) a volume average particle size of the positive electrode active material meets: $1\ \mu m \le Dv50 \le 2\ \mu m$, and $0.4\ \mu m \le Dv10 \le 0.7\ \mu m$.

In any implementation of the present application, the positive electrode film layer further includes a lithium supplement. The lithium supplement includes at least one of a ternary lithium supplementing material, lithium phosphate, dilithium hydrogen phosphate, lithium sulfate, lithium sulfite, lithium molybdate, lithium nickelate, lithium ferrite, lithium oxalate, lithium titanate, lithium tetraborate, lithium metasilicate, lithium metamanganate, lithium tartrate, and lithium citrate. The lithium supplement can add lithium ions to the positive electrode film layer, to make up for the irreversible loss of lithium ions in the system and improve capacity, thereby improving the energy density of the battery cell.

In any implementation of the present application, the ternary lithium supplementing material includes $Li_{x2}A2_{y2}Ni_{a2}Co_{b2}Mn_{c2}M4_{(1-a2-b2-c2)}Q2_{z2}$. $0 < x2 \le 2.1$, and $0 \le y2 \le 2.1$. $0 \le a2 \le 1$, $0 \le b2 \le 1$, $0 \le c2 \le 1$, and $0.1 \le a2+b2+c2 \le 1$. $1.8 \le z2 < 3.5$. A2 includes at least one of Na, K, and Mg. M4 includes at least one of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce. Q2 includes at least one of O and F.

In any implementation of the present application, the positive electrode plate further includes a positive electrode conductive layer. The positive electrode conductive layer is disposed between the positive electrode current collector and the positive electrode film layer on at least one side. The positive electrode conductive layer includes a conductive agent. The conductive agent includes at least one of superconducting carbon, conductive graphite, acetylene black, carbon black, Ketjen black, carbon dots, carbon nanotubes, graphene, and carbon nanofibers.

In any implementation of the present application, a thickness of the positive electrode conductive layer is 0.5 $\mu m$ to 2 $\mu m$.

In any implementation of the present application, the positive electrode conductive layer includes a binder. The binder includes at least one of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, polyacrylic acid, and fluorinated acrylate resin.

Optionally, in the positive electrode conductive layer, a mass content of the conductive agent is 30% to 50%, and a mass content of the binder is 50% to 70%.

In any implementation of the present application, a compaction density of the negative electrode plate after the secondary battery is charged to 100% SOC at a charging rate of 0.33 C is 1.15 $g/cm^3$ to 1.46 $g/cm^3$, optionally 1.15 $g/cm^3$ to 1.36 $g/cm^3$.

In any implementation of the present application, the compaction density of the negative electrode plate after the secondary battery is charged to 100% SOC at the charging rate of 0.33 C is 1.15 $g/cm^3$ to 1.26 $g/cm^3$, and the mass content of the first additive in the electrolyte solution is 3% to 8%.

In any implementation of the present application, at least one of the following conditions is met:

(1) the mass content of the second additive in the electrolyte solution is 0.5% to 3%; and
(2) the mass content of the first solvent in the organic solvent is 30% to 40%.

In any implementation of the present application, the compaction density of the negative electrode plate after the secondary battery is charged to 100% SOC at the charging rate of 0.33 C is > 1.26 $g/cm^3$ and ≤ 1.36 $g/cm^3$, and the mass content of the first additive in the electrolyte solution is 2.5% to 6.5%.

In any implementation of the present application, at least one of the following conditions is met:

(1) the mass content of the second additive in the electrolyte solution is 1% to 4%; and
(2) the mass content of the first solvent in the organic solvent is 25% to 38%.

In any embodiment of the present application, the electrolyte solution further includes a second solvent. The second solvent includes at least one of linear carbonate, carboxylate, ether, nitrile, and sulfone.
In any implementation of the present application, the second solvent includes carboxylate. Optionally, the carboxylate includes at least one of methyl formate, methyl acetate, ethyl acetate, propyl acetate, methyl propionate, ethyl propionate, propyl propionate, and methyl butyrate.
In any implementation of the present application, a charging time of the secondary battery from 10% SOC to 80% SOC at 30°C is 6 min to 15 min, a mass content of the carboxylate in the organic solvent is 20% to 75%, and the total mass content of the first additive and the second additive in the electrolyte solution is 2% to 9%.
In any implementation of the present application, in the electrolyte solution, the mass content of the first additive is 1.5% to 7%, and the mass content of the second additive is 0.5% to 4%.
In any implementation of the present application, the electrolyte solution includes a lithium salt. The lithium salt includes at least one of lithium hexafluorophosphate, lithium tetrafluoroborate, lithium perchlorate, lithium hexafluoroarsenate, fluorosulfonyl imide salt, lithium trifluoromethanesulfonate, lithium difluorophosphate, lithium bis(oxalato) borate, lithium bis(oxalato)borate, lithium difluorobis(oxalato)phosphate, and lithium tetrafluoro(oxalato)phosphate.
In any implementation of the present application, a concentration of the lithium salt in the electrolyte solution is 0.7 mol/L to 1.5 mol/L.
In any implementation of the present application, the lithium salt includes at least one of LiFSI and $LiPF_6$, and the lithium salt meets at least one of the following conditions:

(1) a concentration of the LiFSI is 0.2 mol/L to 0.5 mol/L;
(2) a concentration of the $LiPF_6$ is 0.5 mol/L to 1.3 mol/L; and
(3) the lithium salt includes LiFSI and $LiPF_6$, and a concentration ratio of the LiFSI to the $LiPF_6$ is (2 to 5):10.

In any implementation of the present application, the negative electrode plate further includes a negative electrode conductive layer. The negative electrode conductive layer is disposed between the negative electrode current collector and the negative electrode film layer on at least one side. The negative electrode conductive layer includes a conductive agent. The conductive agent includes at least one of superconducting carbon, conductive graphite, acetylene black, carbon black, Ketjen black, carbon dots, carbon nanotubes, graphene, and carbon nanofibers.
In any implementation of the present application, a thickness of the negative electrode conductive layer is 0.5 μm to 2 μm.
In any implementation of the present application, the negative electrode conductive layer includes a binder. The binder includes at least one of styrene-butadiene rubber, water-soluble unsaturated resin, waterborne acrylic resin, polyvinyl alcohol, sodium alginate, and carboxymethyl chitosan.
In any implementation of the present application, in the negative electrode conductive layer, a mass content of the conductive agent is 20% to 40%, and a mass content of the binder is 60% to 80%.
In any implementation of the present application, the negative electrode film layer includes at least one negative electrode active layer. The at least one negative electrode active layer includes the first graphite.
In any implementation of the present application, the negative electrode film layer includes only one negative electrode active layer. The negative electrode active layer contains the first graphite. The Dv50 particle size of the first graphite is 4.2 μm to 7.2 μm. A Dv50 particle size of the second graphite is 7.8 μm to 14.8 μm.
In any implementation of the present application, a mass ratio of the first graphite to the second graphite is 2:8 to 6:4, optionally 3:7 to 5:5.
In any implementation of the present application, a mass content of the first graphite in the negative electrode active layer is ≥ 20% and < 50%, and the total mass content of the first additive and the second additive in the electrolyte solution is 3% to 8%; or
the mass content of the first graphite in the negative electrode active layer is 50% to 70%, and the total mass content of the first additive and the second additive in the electrolyte solution is 4% to 10%.
In any implementation of the present application, the negative electrode film layer includes a first negative electrode active layer and a second negative electrode active layer that are sequentially stacked on a same side of the negative electrode current collector. The first negative electrode active layer includes at least one of artificial graphite and natural graphite. The second negative electrode active layer includes the first graphite and third graphite. The first graphite includes artificial graphite. A Dv50 particle size of the third graphite is 7.8 μm to 14.8 μm.
In any implementation of the present application, in the second negative electrode active layer, a mass ratio of the first graphite to the third graphite is 2:8 to 8:2, optionally 3:7 to 7:3.
In any implementation of the present application, at least one of the following conditions is met:

(1) a ratio of a total amount of the negative electrode active material in the second negative electrode active layer to a total amount of the negative electrode active material in the first negative electrode active material layer is 3:7 to 7:3, optionally 4:6 to 6:4;

(2) the mass content of the first graphite in the second negative electrode active layer is 20% to 70%; optionally, the mass content of the first graphite in the second negative electrode active layer is ≥ 20% and < 50%, and the total mass content of the first additive and the second additive in the electrolyte solution is 3% to 7%; or the mass content of the first graphite in the second negative electrode active layer is 50% to 70%, and the total mass content of the first additive and the second additive in the electrolyte solution is 3.5% to 10%; and

(3) the Dv50 particle size of the graphite in the first negative electrode active layer is equal to or greater than the Dv50 particle size of the first graphite in the second negative electrode active layer; optionally, the Dv50 particle size of the graphite in the first negative electrode active layer is 5.8 μm to 12.8 μm, optionally 7.8 μm to 12.8 μm; and optionally, the Dv50 particle size of the graphite in the second negative electrode active layer is 2.2 μm to 7.7 μm, optionally 4.2 μm to 7.2 μm.

In any implementation of the present application, the artificial graphite includes graphite body particles and a coating layer. The graphite body particle includes a secondary particle formed by aggregation of a plurality of primary particles. The coating layer coats a surface of the body particle. The coating layer includes amorphous carbon.

In any implementation of the present application, at least one of the following conditions is met:

(1) based on a total mass of the artificial graphite, a mass content of the amorphous carbon is 2% to 5%; and

(2) a powder resistivity of the artificial graphite is ≤ 0.04 Ω•cm.

In any implementation of the present application, a gravimetric capacity of the first graphite in a button battery charged at a rate of 0.1 C is ≥ 350 mAh/g, optionally 350 mAh/g to 440 mAh/g.

In any implementation of the present application, the negative electrode active material further includes a silicon-based material. The silicon-based material includes at least one of silicon-oxygen compounds and silicon-carbon composites. In the negative electrode active material, a mass content of silicon in the silicon-based material is 0.3% to 10%, optionally 1% to 6%.

In any implementation of the present application, a separator includes a porous base film and a functional layer disposed on at least one side of the porous base film.

In any implementation of the present application, at least one of the following conditions is met:

(1) a thickness of the porous base film is ≤ 12 μm, optionally ≤ 9 μm; and

(2) a porosity of the porous base film is 20% to 70%, optionally 35% to 60%.

In any implementation of the present application, the separator includes a first functional layer and a second functional layer that are disposed on two sides of the porous base film. The first functional layer includes first inorganic particles. The second functional layer includes composite particles. The composite particles include second inorganic particles and non-fluoropolymer particles. The second inorganic particles are attached to a surface of the non-fluoropolymer particles and/or dispersed inside the non-fluoropolymer particles.

In any implementation of the present application, at least one of the following conditions is met:

(1) the non-fluoropolymer particles include acrylate polymer particles; and

(2) the first functional layer is located between the negative electrode plate and the porous base film, and the second functional layer is located between the positive electrode plate and the porous base film.

A second aspect of the present application provides a power consuming apparatus, including the secondary battery according to the first aspect of the present application.

Details of one or more embodiments of the present application are set forth in the following accompanying drawings and description. Other features, objectives, and advantages of the present application become apparent with reference to the specification, the accompanying drawings, and the claims.

**BRIEF DESCRIPTION OF THE DRAWINGS**

To describe the technical solutions in the embodiments of the present application or in the conventional technologies more clearly, the following briefly introduces the accompanying drawings required for describing the embodiments or the conventional technologies. Apparently, the accompanying drawings in the following description merely show embodiments of the present application, and a person of ordinary skill in the art may still derive other drawings

from the disclosed accompanying drawings without creative efforts.

FIG. 1 is a schematic view of a battery cell according to an implementation of the present application;
FIG. 2 is an exploded view of the battery cell according to an implementation of the present application shown in FIG. 1;
FIG. 3 is a schematic view of a battery module according to an implementation of the present application;
FIG. 4 is a schematic view of a battery pack according to an implementation of the present application;
FIG. 5 is an exploded view of the battery pack according to an implementation of the present application shown in FIG. 4; and
FIG. 6 is a schematic view of a power consuming apparatus powered by a secondary battery according to an implementation of the present application.

Description of reference numerals:

1, battery pack; 2, upper box; 3, lower box; 4, battery module; 5, battery cell; 51, case; 52, electrode assembly; 53, cover plate; and 6, power consuming apparatus.

## DETAILED DESCRIPTION

The technical solution in the embodiments of the present application will be described below clearly and completely with reference to the accompanying drawings in the embodiments of the present application. Apparently, the described embodiments are only some, rather than all of the embodiments of the present application. All other embodiments obtained by a person of ordinary skill in the art based on the embodiments in the present application without creative efforts shall fall within the protection scope of the present application.

The term "range" disclosed in the present application is defined in a form of a lower limit and an upper limit. A given range is defined by selecting a lower limit and an upper limit, and the selected lower limit and upper limit define boundaries of a particular range. The range defined in this manner may be inclusive or exclusive of the end values, and any end value may be independently inclusive or exclusive and may be arbitrarily combined, that is, any lower limit may be combined with any upper limit to form a range. For example, if ranges of 60 to 120 and 80 to 110 are listed for a particular parameter, it is to be understood that ranges of 60 to 110 and 80 to 120 are also contemplated. In addition, if the minimum range values 1 and 2 and the maximum range values 3, 4 and 5 are listed, the following ranges are all contemplated: 1 to 3, 1 to 4, 1 to 5, 2 to 3, 2 to 4 and 2 to 5. In the present application, unless otherwise specified, a numerical range "a to b" represents an abbreviated representation of any combination of real numbers between a to b, where both a and b are real numbers. For example, the numerical range "0 to 5" represents that all real numbers between 0 and 5 are listed herein, and "0 to 5" is merely the abbreviated representation of the combination of these numbers. In addition, when a parameter is expressed as an integer equal to or greater than 2, it is equivalent to disclosing that the parameter is an integer such as 2, 3, 4, 5, 6, 7, 8, 9, 10, 11, and 12. For example, when a parameter is expressed as an integer selected from "2 to 10", it is equivalent to disclosing that the parameter is an integer such as 2, 3, 4, 5, 6, 7, 8, 9, and 10.

The terms "a plurality of" and the like in the present application mean that the number is equal to 2 or greater than 2 unless otherwise specified. For example, "one or more" indicates one or equal to or greater than two.

Unless otherwise specified, all implementations and optional implementations of the present application can be combined with each other to form new technical solutions.

"Embodiment" mentioned herein means that particular features, structures, or characteristics described with reference to the embodiment may be included in at least one embodiment or implementation of the present application. The phrase appearing at different positions of the specification may not necessarily refer to the same embodiment or an independent or alternative embodiment that is mutually exclusive with another embodiment. A person skilled in the art explicitly and implicitly understands that the embodiments described herein may be combined with other embodiments. The term "implementation" mentioned herein has a similar understanding.

A person skilled in the art may understand that, in the method in the implementations or embodiments, a writing order of steps does not imply a strict order of execution and does not impose any limitation on an implementation process, and a specific execution order of the steps should be determined according to functions and possible internal logic of the steps. Unless otherwise specified, all the steps in the present application can be performed in the order or in a random order, and preferably in the order. For example, a method including steps (a) and (b) means that the method may include steps (a) and (b) performed sequentially, or may include steps (b) and (a) performed sequentially. For example, that the method may further include step (c) indicates that step (c) may be added to the method in any order. For example, the method may include steps (a), (b), and (c), may include steps (a), (c), and (b), or may include steps (c), (a), and (b), or the like.

In the present application, in an open technical feature or technical solution described by using words such as "contain", "include", and "comprise", unless otherwise specified, additional members other than the listed members are

not excluded, which can be considered as providing a closed feature or solution including the listed members, and further providing an open feature or solution including the additional members plus the listed members. For example, A includes a1, a2, and a3. Unless otherwise specified, A may further include other members, or may not include additional members, which can be considered as not only providing a feature or solution "A consists of a1, a2, and a3", but also providing a feature or solution "A includes not only a1, a2, and a3, but also other members".

In the present application, unless otherwise specified, A (such as B) indicates that B is a non-limiting example of A, which can be understood that A is not limited to B.

In the present application, "optionally" and "optional" means dispensable, that is, any one of the two parallel solutions selected from "essential" or "not essential". If "optional" appears a plurality of times in a technical solution, unless otherwise specified and in case of no conflict or mutual constraints, each "optional" is independent.

An implementation of the present application provides a secondary battery, including a positive electrode plate, a negative electrode plate, and an electrolyte solution.

The positive electrode plate includes a positive electrode current collector and a positive electrode film layer. The positive electrode film layer is disposed on at least one side of the positive electrode current collector. The positive electrode film layer includes a positive electrode active material.

The negative electrode plate includes a negative electrode current collector and a negative electrode film layer. The negative electrode film layer is disposed on at least one side of the negative electrode current collector. The negative electrode film layer includes a negative electrode active material. The negative electrode active material includes first graphite. A Dv50 particle size of the first graphite is 2.2 μm to 7.7 μm.

The electrolyte solution includes an organic solvent and an organic additive. The organic solvent includes a first solvent. The first solvent includes cyclic carbonate (EC). Based on a total mass of the organic solvent, a mass content of the first solvent is 25% to 40%. The organic additive includes a first additive and a second additive. The first additive includes vinylene carbonate (VC). The second additive includes an ethylene carbonate derivative. Based on a total mass of the electrolyte solution, a mass percentage of the first additive in the electrolyte solution is 2% to 10%, and a mass percentage of the second additive in the electrolyte solution is 0.3% to 6%.

Therefore, the negative electrode active material of the above secondary battery includes the above first graphite having a small particle size, so the negative electrode plate containing the first graphite can improve fast charge performance of the battery. However, the graphite having a small particle size has many surface defects and high reactivity, and consumes the electrolyte solution at a high rate. In addition, in a fast charge situation, the temperature rise of the cell is high, and the stability of the electrolyte solution is affected, so it is difficult to improve the cycling performance of the battery. Therefore, by improving the first solvent, the first additive, and the second additive, and the contents thereof in the above electrolyte solution, the electrolyte solution has good heat stability, so that a stable interface film is formed on the surface of the negative electrode plate. As a result, the consumption rate of the electrolyte solution and the direct current internal resistance DCR of the battery can be reduced, thereby improving the cycling performance and the fast charge performance of the secondary battery. In this way, the above secondary battery can achieve balance among good fast charge performance, normal-temperature cycling performance, and high-temperature cycling performance.

The above first solvent includes the cyclic carbonate. The cyclic carbonate has high permittivity and good film forming properties. If the content of the first solvent in the electrolyte solution is excessively low, the stability of the electrolyte solution becomes poor, leading to a decrease in the conductivity. However, if the content of the first solvent is excessively high, the viscosity and the melting point of the electrolyte solution increase, and therefore, the conductivity of the electrolyte solution and the kinetic performance of the battery are deteriorated, thereby leading to the deterioration of the cycling performance. Therefore, by controlling the first solvent to fall within the above content range at the same time, the electrolyte solution can have good heat stability and appropriate conductivity.

The above first additive includes the vinylene carbonate (VC). The second additive includes the ethylene carbonate derivative. The first additive and the second additive can participate in film formation at an interface. If the content of the first additive and the second additive is excessively low, the first solvent excessively participates in film formation, which destroys the stability of the electrolyte solution, thereby increasing the consumption rate of the electrolyte solution, and deteriorating the cycling performance and the storage life of the battery. As the content of the first additive increases, the high-temperature cycle life of the battery increases. However, if the content of the first additive is excessively high, the kinetic window and the direct current internal resistance DCR of the battery are deteriorated, causing deterioration of the cycling performance and disfavoring improvement of fast charge performance. As the content of the second additive increases, the normal-temperature cycle life and the fast charge performance of the battery are improved. However, if the content of the second additive is excessively high, the high-temperature performance of the battery is deteriorated, and the high-temperature cycle life decreases. Therefore, by controlling the first additive and the second additive to each fall within the above range at the same time, the electrolyte solution achieves balance between the film forming stability and the battery kinetics.

Therefore, by controlling the first solvent in the above electrolyte solution to fall within the above content range, the heat stability of the electrolyte solution can be improved, and the conductivity of the electrolyte solution can be made to

fall within an appropriate range. In addition, by controlling the first additive and the second additive to each fall within the above range, the electrolyte solution achieves balance between the battery kinetics and the film forming stability, thereby reducing the consumption rate of the electrolyte solution and improving the normal-temperature and high-temperature cycling performance and the storage life of the cell. In addition, the battery has a low direct current internal resistance DCR and good fast charge performance. The electrolyte solution is applicable to the negative electrode plate and the battery system including the above first graphite having a small particle size, and can enable the secondary battery to achieve balance among high fast charge performance, normal-temperature cycling performance, and high-temperature cycling performance.

Electrolyte solution

In some implementations of the present application, the cyclic carbonate in the first solvent includes at least one of ethylene carbonate (EC) and propylene carbonate (PC).

As an example, the mass content of the first solvent in the organic solvent may be, but not limited to 25%, 28%, 30%, 32%, 35%, 38%, or 40%. Further, the mass content of the first solvent in the organic solvent is 25% to 38% or 30% to 40%, or is within a range formed by any of the above point values as end values. The following is similar. By controlling the mass content of the first solvent in the organic solvent to fall within this range, the battery can have better cycling performance.

As an example, the mass content of the first additive in the electrolyte solution may be, but not limited to, 2%, 2.5%, 3%, 3.5%, 4%, 4.5%, 5%, 5.5%, 6%, 6.5%, 7%, 7.5%, 8%, 8.5%, 9%, 9.5%, or 10%. Further, the mass content of the first additive in the electrolyte solution is 3% to 8%. Further, the first additive is vinylene carbonate (VC). By controlling the mass content of the first additive in the electrolyte solution to fall within the optional range, the battery can have better cycling performance, especially high-temperature cycling performance.

In some implementations of the present application, a structure of the ethylene carbonate derivative in the second additive is as follows:

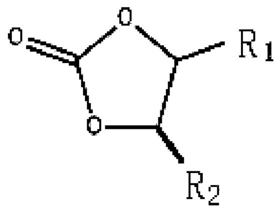
,

where $R_1$ and $R_2$ each independently includes any one of hydrogen, halogen, C1-C5 alkyl, and C1-C5 haloalkyl, and $R_1$ and $R_2$ are not both hydrogen. Further, the halogen includes at least one of fluorine, chlorine, and bromine, and the C1-C5 alkyl and C1-C5 haloalkyl include, but are not limited to, at least one of halogenated or non-halogenated methyl, ethyl, n-propyl, isopropyl, n-butyl, isobutyl, sec-butyl, tert-butyl, n-pentyl and isomers thereof. These second additives have good film forming properties, electrical conduction properties, and stability, and can improve fast charge performance and cycling performance, especially normal-temperature cycling performance, of the battery.

Further, the above ethylene carbonate derivative includes at least one of fluoroethylene carbonate (FEC), difluoroethylene carbonate (DFEC), and trifluoromethyl ethylene carbonate.

As an example, the mass content of the second additive in the electrolyte solution may be, but not limited to, 0.3%, 0.4%, 0.5%, 0.8%, 1%, 1.5%, 2%, 2.5%, 3%, 3.5%, 4%, 4.5%, 5%, 5.5%, and 6%. Further, the mass content of the second additive in the electrolyte solution is 1.5% to 5%. By controlling the mass content of the second additive in the electrolyte solution to fall within the optional range, the battery can have better fast charge performance and cycling performance, especially normal-temperature cycling performance.

In some implementations of the present application, a total mass content of the first additive and the second additive is 3% to 12%. As an example, the total mass content may be 3%, 3.5%, 4%, 4.5%, 5%, 5.5%, 6%, 6.5%, 7%, 7.5%, 8%, 8.5%, 9%, 9.5%, 10%, 11%, or 12%. Further, the total mass content of the first additive and the second additive is 3.5% to 9%. By controlling the total mass of the first additive and the second additive to fall within the above range, the problem that the graphite having a small particle size has high activity and consumes the additive at a higher rate in the cycling process, causing dramatic drop in the cycling performance, can be further alleviated, thereby improving the cycling performance of the battery.

In some embodiments of the present application, the electrolyte solution further includes a second solvent. Further, the second solvent includes at least one of linear carbonate, carboxylate, ether, nitrile, and sulfone. The second solvent and the first solvent are jointly used as the solvent, and function to lower the melting point and the viscosity of the

electrolyte solution system and improve lithium ion transfer performance of the electrolyte solution.

Further, the linear carbonate includes at least one of dimethyl carbonate (DMC), diethyl carbonate (DEC), dipropyl carbonate (DPC), ethyl methyl carbonate (EMC), methyl propyl carbonate (MPC), and ethyl propyl carbonate (EPC).

Further, the carboxylate includes at least one of methyl formate (MF), methyl acetate (MA), ethyl acetate (EA), propyl acetate, methyl propionate, ethyl propionate (EP), propyl propionate, methyl butyrate, ethyl butyrate and, and 1,4-butyrolactone. In some examples, the second solvent may include the carboxylate. Further, the second solvent includes both the carboxylate and the linear carbonate.

Further, the ether includes, but not limited to, at least one of diethyl ether and 1,2- dimethoxyethane (DME, also known as ethylene glycol dimethyl ether).

Further, the nitrile includes, but are not limited to, acetonitrile (AN).

Further, the sulfone includes, but not limited to, at least one of sulfolane, dimethyl sulfone, methyl ethyl sulfone, and diethyl sulfone.

Further, a mass content of the second solvent in the organic solvent is 20% to 75%. The mass content may be 20%, 25%, 30%, 35%, 40%, 45%, 50%, 55%, 60%, 65%, 70%, 73%, or 75%. Further, a mass content of the carboxylate in the organic solvent is 30% to 60%, or 30% to 75%. In a specific example, the second solvent is the carboxylate.

In some implementations of the present application, the electrolyte solution further includes an electrolyte salt. A concentration of the electrolyte salt in the electrolyte solution is 0.1 mol/L to 2 mol/L. As an example, the concentration of the electrolyte salt in the electrolyte solution may be 0.1 mol/L, 0.2 mol/L, 0.4 mol/L, 0.5 mol/L, 0.6 mol/L, 0.8 mol/L, 1 mol/L, 1.2 mol/L, 1.3 mol/L, 1.5 mol/L, 1.6 mol/L, 1.8 mol/L, or 2 mol/L; and further may be 0.6 mol/L to 1.3 mol/L, or may be within a range formed by any two of the above point values as end values.

In some implementations of the present application, the electrolyte salt may include a lithium salt. The lithium salt includes at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS, $CF_3SO_2Li$), lithium difluorophosphate ($LiPO_2F_2$), lithium difluoro(oxalato)borate (LiDFOB), lithium bis(oxalato)borate (LiBOB), lithium difluorobis(oxalato)phosphate (LiDFOP), and lithium tetrafluoro(oxalato)phosphate (LiTFOP).

Optionally, a concentration of the lithium salt in the electrolyte solution is 0.7 mol/L to 1.5 mol/L. Optionally, the lithium salt includes at least one of fluorosulfonyl imide salt and $LiPF_6$. More optionally, the fluorosulfonyl imide salt includes at least one of LiFSI and LiTFSI.

Further, the lithium salt includes at least one of LiFSI and $LiPF_6$. Further, a concentration of the LiFSI in the electrolyte solution is 0.2 mol/L to 0.5 mol/L. Further, a concentration of the $LiPF_6$ in the electrolyte solution is 0.5 mol/L to 1.3 mol/L. Further, the lithium salt includes LiFSI and $LiPF_6$. A molar ratio of the LiFSI to the $LiPF_6$ is (2 to 5):10. The lithium bis(fluorosulfonyl)imide LiFSI has good conductivity and heat resistance, and does not easily hydrolyze at high temperature, and thus is particularly applicable to the fast charge system with large temperature rise in the present application. However, when the temperature is excessively high, for example, 200°C or higher, the LiFSI decomposes to generate heat, deteriorating a safe boundary of the cell. Therefore, the $LiPF_6$ is added to jointly serve as the lithium salt, which also effectively improves safety performance of the battery.

In some implementations of the present application, a mass of the electrolyte solution at unit battery rated capacity 1 Ah of the secondary battery is 2.2 g to 2.95 g, for example, may be 2.2 g, 2.3 g, 2.4 g, 2.5 g, 2.6 g, 2.65 g, 2.7 g, 2.8 g, 2.9 g, or 2.95 g. Further, the mass may be 2.2 g to 2.65 g or 2.65 g to 2.95 g. The above electrolyte solution in the present application is particularly applicable to a battery with a low injection coefficient system. The electrolyte solution has a low consumption rate and good kinetics, and therefore can improve the cycling performance of the battery with a low injection coefficient system.

Further, the mass of the electrolyte solution at unit battery rated capacity 1 Ah of the secondary battery is 2.2 g to 2.65 g, and the total mass content of the first additive and the second additive in the electrolyte solution is 5% to 9%. Because the mass of the electrolyte solution at unit battery rated capacity 1 Ah of the secondary battery is low, the total mass content of the first additive and the second additive can be properly increased, how can improve the cycling performance of the battery with a low injection coefficient system. As an example, the mass of the electrolyte solution at unit battery rated capacity 1 Ah of the secondary battery may be 2.2 g, 2.3 g, 2.4 g, 2.5 g, 2.6 g, or 2.65 g, or within a range formed any two of the above values. The total mass content of the first additive and the second additive in the electrolyte solution may be 5%, 5.5%, 6%, 6.5%, 7%, 7.5%, 8%, 8.5%, or 9%, or within a range formed any two of the above values.

Alternatively, the mass of the electrolyte solution at unit battery rated capacity 1 Ah of the secondary battery is > 2.65 g and ≤ 2.95 g, and the total mass content of the first additive and the second additive in the electrolyte solution is 3.5% to 6.5%. Because the mass of the electrolyte solution at unit battery rated capacity 1 Ah of the secondary battery is high, the total mass content of the first additive and the second additive can be properly reduced, which can achieve balance between the cost and the cycling performance of the battery. As an example, the mass of the electrolyte solution at unit battery rated capacity 1 Ah of the secondary battery may be 2.68 g, 2.7 g, 2.8 g, 2.9 g, or 2.95 g, or within a range formed any

two of the above values, and the total mass content of the first additive and the second additive in the electrolyte solution may be 3.5%, 4%, 4.5%, 5%, 5.5%, 6%, or 6.5%, or within a range formed by any two of the above values.

A method for testing the mass of the electrolyte solution at unit battery rated capacity 1 Ah of the secondary battery is as follows: (1) Take a battery, and weigh the mass $M_0$ of the battery; (2) disassemble the battery, pour out the free electrolyte solution, and take out the electrode plates, the separator, the mechanical parts, and the adhesive paper; (3) soak and clean the electrode plates, the separator, the mechanical parts, and the adhesive paper separately by using dimethyl carbonate (DMC), where the soaking time is 24 h, and the cleaning is performed 3 times or more; (4) after the cleaning is completed, place the electrode plates, the separator, the mechanical parts, and the adhesive paper in an oven until they are completely dry; (5) weigh the electrode plates, the separator, the mechanical parts, and the adhesive paper, and record the mass as $M_1$; and (6) calculate the mass of the electrolyte solution at unit battery rated capacity 1 Ah of the secondary battery according to $(M_0-M_1)/a$. a = battery rated capacity of the secondary battery, in Ah.

As a non-limiting example, the positive electrode current collector has two opposite surfaces in a thickness direction of the positive electrode current collector, and the positive electrode film layer is disposed on either or both of the two opposite surfaces of the positive electrode current collector.

In some implementations, the positive electrode current collector may be a metal foil or a composite current collector. For example, in the case of the metal foil, an aluminum foil may be used. The composite current collector may include a polymer material substrate layer and a metal layer formed on at least one surface of the polymer material substrate layer. The composite current collector may be obtained by forming the metal material on the polymer material substrate. In the positive electrode current collector, non-limiting examples of the metal material may include at least one of aluminum, an aluminum alloy, nickel, a nickel alloy, titanium, a titanium alloy, silver, a silver alloy, and the like. In the positive electrode current collector, non-limiting examples of the polymer material substrate may include at least one of polypropylene (PP), polyethylene terephthalate (PET), polybutylene terephthalate (PBT), polystyrene (PS), polyethylene (PE), and other substrates.

In some implementations, a thickness of the positive electrode current collector is 10 $\mu$m to 15 $\mu$m, optionally 12 $\mu$m to 15 $\mu$m. Exemplarily, the thickness of the positive electrode current collector is 10 $\mu$m, 10.5 $\mu$m, 11 $\mu$m, 11.5 $\mu$m, 12 $\mu$m, 12.5 $\mu$m, 13 $\mu$m, 13.5 $\mu$m, 14 $\mu$m, 14.5 $\mu$m, or 15 $\mu$m, or within a range formed by any two of the above values.

When the thickness of the positive electrode current collector falls within the above range, the positive electrode current collector has excellent overcurrent capability, and the battery cell can have high energy density.

In the implementations of the present application, the thicknesses of the positive electrode film layer and the positive electrode current collector have meanings well known in the art, and may be measured by using devices and methods well known in the art. For example, the thickness of the positive electrode plate is measured by using a ten-thousandth micrometer, and the film layer on the surface of the positive electrode current collector is removed. The thickness of the positive electrode current collector is measured by using the ten-thousandth micrometer. When the positive electrode film layer is applied on one side, the thickness of the positive electrode film layer is the thickness of the positive electrode plate minus the thickness of the positive electrode current collector. When the positive electrode film layer is applied on two sides, the thickness of the positive electrode film layer is (the thickness of the positive electrode plate minus the thickness of the positive electrode current collector)/2.

The positive electrode film layer is usually formed by applying a positive electrode slurry on the positive electrode current collector and performing drying and cold pressing. The positive electrode slurry is usually formed by dispersing the positive electrode active material, an optional conductive agent, an optional binder, and any other components in a solvent and performing stirring uniformly. The solvent may be, but not limited to, N-methylpyrrolidone (NMP).

On the positive electrode plate, other additional functional layers other than the positive electrode film layer are not excluded. For example, in some embodiments, the positive electrode plate in the implementations of the present application further includes a positive electrode conductive layer sandwiched between the positive electrode current collector and the positive electrode film layer and arranged on a surface of the positive electrode current collector. In some other embodiments, the positive electrode plate in the implementations of the present application further includes a protective layer covering a surface of the positive electrode film layer.

The positive electrode active material may be a positive electrode active material used for batteries and well known in the art. In some embodiments, a power compaction density of the positive electrode active material at 30000 N is $\geq$ 2.43 g/cm$^3$, optionally, 2.48 g/cm$^3$ to 2.85 g/cm$^3$. Further, the powder compaction density of the positive electrode active material at 30000 N is 2.5 g/cm$^3$ to 2.8 g/cm$^3$.

By using the positive electrode active material having a high powder compaction density, the compaction density of the positive electrode plate can be increased, thereby increasing the energy density of the battery.

As an example, the powder compaction density of the positive electrode active material at 30000 N in the positive electrode plate may be 2.43 g/cm$^3$, 2.45 g/cm$^3$, 2.5 g/cm$^3$, 2.55 g/cm$^3$, 2.6 g/cm$^3$. 2.65 g/cm$^3$, 2.7 g/cm$^3$, 2.75 g/cm$^3$, 2.8 g/cm$^3$, or 2.85 g/cm$^3$.

As a non-limiting example, the positive electrode active material may include at least one of the following materials: a phosphate positive electrode material, a lithium transition metal oxide, and respective modified compounds

thereof. The phosphate positive electrode material includes at least one of lithium-containing phosphate with an olivine structure and derivatives thereof.

Further, the positive electrode active material may include at least one of lithium-containing phosphate with an olivine structure and derivatives thereof. The lithium-containing phosphate and derivatives thereof serving as the positive electrode active material have a smaller particle size and a larger specific surface area, and easily absorb water. Therefore, the electrolyte solution in the battery of this system is hydrolyzed more significantly, and more HF is generated. As a result, the consumption problem of the electrolyte solution is more prominent. The use of the above electrolyte solution can help give full play to its advantage of low consumption rate, thereby improving the cycling performance of this type of battery. In addition, the use of the electrolyte solution helps give full play to the advantages high energy density, long cycle life, and good safety performance of the lithium-containing phosphate and derivatives thereof.

In some embodiments of the present application, the lithium-containing phosphate with an olivine structure and the derivatives thereof include compounds with a general formula $Li_{x1}Al_{y1}M1_{a1}M2_{b1}P_{1-c1}X_{c1}Q1_{z1}$. $0.5 \leq x1 \leq 1.3$, $0 \leq y1 \leq 1.3$, and $0.9 \leq x1+y1 \leq 1.3$. $0.9 \leq a1 \leq 1.5$, $0 \leq b1 \leq 0.5$, and $0.9 \leq a1+b1 \leq 1.5$. $0 \leq c1 \leq 0.5$. $3 \leq z1 \leq 5$. A1 includes at least one of Na, K, and Mg. M1 includes at least one of Mn, Fe, Co, and Ni. M2 includes at least one of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce. X includes at least one of S, Si, Cl, B, C, N, and P. Q1 includes at least one of O and F. The lithium-containing phosphate with an olivine structure has excellent cycling stability, which helps improve the cycling performance of the battery cell.

Further, the compounds $Li_{x1}Al_{y1}M1_{a1}M2_{b1}P_{1-c1}X_{c1}Q1_{z1}$ include at least one of lithium iron phosphate ($LiFePO_4$), lithium manganese phosphate ($LiMnPO_4$), lithium nickel phosphate ($LiNiPO_4$), and lithium cobalt phosphate ($LiCoPO_4$), and may be doped compounds of these chemical combinations.

The lithium-containing phosphate with an olivine structure and the derivatives thereof may contain a coating layer or may not include a coating layer. In some embodiments of the present application, the positive electrode active material includes a core and an ion conducting layer. The core includes at least one of lithium-containing phosphate with an olivine structure and derivatives thereof. The ion conducting layer coats a surface of the core. The lithium ion conducting layer includes at least one of Fe, C, Ti, Zr, Hf, Ge, and Sn.

The surface of the core is coated with the ion conducting layer, so that the conductivity of the lithium-containing phosphate with an olivine structure and the derivatives thereof can be improved, and the powder resistivity of the material can be reduced, which is beneficial to the migration rate of lithium ions, improves the fast charge capability of the battery, and reduces the heat generation of the battery cell.

Further, the ion conducting layer includes a fast ion conductor with a chemical formula $Li_{3-b}Fe_{2-b}M3_b(PO_m)_n$. M3 includes at least one of Ti, Zr, Hf, Ge, and Sn having a valency of +4. $0 \leq b \leq 1$, $3 \leq m \leq 5$, and $2 \leq n \leq 4$.

Exemplarily, the fast ion conductor is a material having an NASICON structure, and includes, for example, one or more of lithium iron titanium phosphate $Li_2FeTi(PO_4)_3$, lithium iron zirconium phosphate $Li_2FeZr(PO_4)_3$, and lithium iron tin phosphate $Li_2FeSn(PO_4)_3$.

The fast ion conductor having an NASICON structure is a material having an ultra-fast ion conduction capability, has abundant three-dimensional lithium ion diffusion and transfer channels, and has the advantages including high ion conduction efficiency and high structural stability during a plurality of lithium deintercalations and intercalations. Coating the surface of the core with the fast ion conductor containing an NASICON structure can significantly improve the transfer rate of lithium ions during a plurality of lithium deintercalations/intercalations at the positive electrode terminal, improve the ion conductivity of the positive electrode active material, and improve the fast charge capability of the battery cell. In addition, the gravimetric capacity can be improved, and the energy density of the corresponding battery cell can be improved.

In some implementations, the ion conducting layer further includes elemental carbon, which further improves the material. The elemental carbon and the fast ion conductor may be arranged in different layers. For example, the elemental carbon is used as an independent carbon coating layer, and the fast ion conductor is used as an independent fast ion conductor layer. The carbon coating layer may coat the surface of the core, and the fast ion conductor layer is located on the surface of the carbon coating layer, that is, the fast ion conductor layer is located on a side of the carbon coating layer away from the core. Alternatively, the fast ion conductor layer may coat the surface of the core, and the carbon coating layer is located on the surface of the fast ion conductor layer, that is, the carbon coating layer is located on a side of the fast ion conductor layer away from the core. Certainly, the elemental carbon and the fast ion conductor may also be disposed in a same layer.

Optionally, the carbon coating layer may coat the surface of the fast ion conductor layer with an organic carbon source such as glucose or polyethylene glycol through carbonization. The carbon coating layer may partially coat the fast ion conductor layer, or may completely coat the fast ion conductor layer. Disposition of the carbon coating layer can significantly improve electron conductivity of the core, make up for the defect of poor electron conduction performance of the core, and improve the energy density of the battery cell.

Specifically, disposition of the carbon coating layer enables the positive electrode active material of the present application to have the following advantages:

The carbon coating layer in the positive electrode active material of the present application provides suitable channels for transfer of electrons, which can significantly improve the conduction rate of electrons during a plurality of lithium deintercalations and intercalations, improve the electron conductivity of the lithium-containing phosphate, improve the charge capability of the corresponding battery cell, and also improve the energy density.

The carbon coating layer of the positive electrode active material in the present application is loose and porous, so that the electrolyte solution can be in sufficient and effective contact with the lithium-containing phosphate, thereby improving the transfer rate of lithium ions at the phase interface and improving the charge capability of the battery cell.

Coating the surface of the lithium-containing phosphate with the carbon coating layer not only can improve the conductivity of the lithium-containing phosphate, but also can improve the structural stability of the positive electrode active material, thereby effectively preventing iron dissolution of the positive electrode active material during long-term storage and cycling of the battery cell, thus ensuring the cycle life of the battery cell.

The positive electrode active material of the present application, which uses the lithium-containing phosphate as the substrate, gives full play to the advantages of low cost, high use reliability, and good cycling stability of the lithium-containing phosphate, and resolves the disadvantages of poor electron conductivity and ion conductivity by using the ion conducting layer

(the fast ion conductor layer and the carbon coating layer). The battery cell prepared from the positive electrode active material of the present application has significantly improved energy density while having good cycling performance.

In some embodiments, a mass content of carbon in the positive electrode active material is 1% to 2%, and as an example, may be 1%, 1.5%, or 2%. By controlling the mass content of the carbon in the positive electrode active material to fall within the range, the conductivity of the positive electrode active material can be further improved, thereby improving the fast charge performance of the battery. It can be understood that the carbon may come from, but not limited to, the carbon coating layer. As an example, the surface of the lithium-containing phosphate with an olivine structure and the derivatives thereof is coated with the carbon coating layer.

In some embodiments, a powder resistivity of the positive electrode active material is $\leq 20\ \Omega\text{•cm}$, which further improves the conductivity of the positive electrode active material, thereby improving the fast charge performance of the battery. As an example, the powder resistivity of the positive electrode active material may be 20 Ω•cm, 15 Ω•cm, 10 Ω•cm, 8 Ω•cm, 5 Ω•cm, or the like, optionally ≤ 11 Ω•cm.

In some embodiments, a volume average particle size of the positive electrode active material meets: $1\ \mu m \leq Dv50 \leq 2\ \mu m$, and $0.4\ \mu m \leq Dv10 \leq 0.7\ \mu m$. In this way, fast charge performance and power performance of the battery are further improved. As an example, a Dv50 particle size of the positive electrode active material may be 1 μm, 1.5 μm, or 2 μm. As an example, a volume average particle size Dv10 of the positive electrode active material may be 0.4 μm, 0.5 μm, 0.6 μm, or 0.7 μm.

Herein, Dv50 and Dv10 have meanings well-known in the art, and may be measured using methods known in the art, for example, using a laser particle size analyzer (such as Malvern Master Size 3000). Dv50 represents the particle size corresponding to the point where the cumulative volume distribution percentage of particles reaches 50%, starting from the small particle size, based on the particle size volume distribution. Dv10 represents the particle size corresponding to the point where the cumulative volume distribution percentage of particles reaches 10%, starting from the small particle size, based on the particle size volume distribution.

The particle size volume distribution may be obtained by using the following method: take a clean beaker, add an appropriate amount of a to-be-tested sample, and sufficiently apply ultrasonic waves to ensure that the sample is completely dispersed. The test instrument is Malvern 2000, USA. After the sample is poured into the sampling tower, it circulates to the test optical path system with the solution. When the particles are irradiated by the laser beam, the particle size distribution feature of the particles can be obtained by receiving and measuring energy distribution of scattered light (shading degree: 8% to 12%). A particle size volume distribution diagram is drawn according to test data.

In some embodiments, the positive electrode film layer may further include a lithium supplement. Further, the lithium supplement includes at least one of a ternary lithium supplementing material, lithium phosphate, dilithium hydrogen phosphate, lithium sulfate, lithium sulfite, lithium molybdate, lithium nickelate, lithium ferrite, lithium oxalate, lithium titanate, lithium tetraborate, lithium metasilicate, lithium metamanganate, lithium tartrate, and lithium citrate. The lithium supplement can add lithium ions to the positive electrode film layer, to make up for the irreversible loss of lithium ions in the system and improve capacity, thereby improving the energy density of the battery cell.

Further, the ternary lithium supplementing material includes $Li_{x2}A2_{y2}Ni_{a2}Co_{b2}Mn_{c2}M4_{(1-a2-b2-c2)}Q2_{z2}$. $0 < x2 \leq 2.1$, and $0 \leq y2 \leq 2.1$. $0 \leq a2 \leq 1$, $0 \leq b2 \leq 1$, $0 \leq c2 \leq 1$, and $0.1 \leq a2+b2+c2 \leq 1$. $1.8 \leq z2 \leq 3.5$. A2 includes at least one of Na, K, and Mg. M4 includes at least one of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce. Q2 includes at least one of O and F.

Further, $0.9 \leq x2+y2 \leq 2.1$.

Exemplarily, the ternary material includes at least one of $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), and $LiNi_{0.80}Co_{0.15}Al_{0.05}O_2$.

The lithium supplement and the positive electrode active material may be located in the same layer or may be located in different layers. When the lithium supplement and the positive electrode active material are located in different layers, the lithium supplement may be located in a lithium supplementing layer, and the positive electrode active material may be located in a positive electrode active material layer. In other words, the positive electrode film layer includes the lithium supplementing layer and the positive electrode active material layer. The positive electrode active material layer may be disposed on at least one side of the positive electrode current collector, and the lithium supplementing layer may be located between the positive electrode active material layer and the positive electrode current collector. Alternatively, the lithium supplementing layer may be disposed on at least one side of the positive electrode current collector, and the positive electrode active material layer may be located between the lithium supplementing layer and the positive electrode current collector. Optionally, the lithium supplementing layer may be located between the positive electrode active material layer and the positive electrode current collector.

In some embodiments, in the positive electrode film layer, a mass content of the positive electrode active material is 80% to 98%. For example, the mass content may be 80%, 82%, 84%, 85%, 86%, 88%, 90%, 92%, 94%, 96%, or 98%. Further, in the positive electrode film layer, the mass content of the positive electrode active material may be 90% to 98%.

In some embodiments, the positive electrode film layer further optionally includes a binder. As a non-limiting example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In some implementations, based on the total mass of the positive electrode film layer, a mass content of the binder is $\leq$ 5%.

In some embodiments, the positive electrode film layer further optionally includes a conductive agent. As a non-limiting example, the conductive agent may include at least one of superconducting carbon, acetylene black, carbon black, Ketjen black, carbon dots, carbon nanotubes, graphene, and carbon nanofibers. In some implementations, based on the total mass of the positive electrode film layer, a mass content of the conductive agent is $\leq$ 5%.

In some embodiments, the positive electrode plate may be prepared as follows: disperse the above components for preparing the positive electrode plate, for example, the positive electrode active material, the conductive agent, the binder, and any other components, in a solvent to form a positive electrode slurry; and apply the positive electrode slurry onto a surface on at least one side of a positive electrode current collector, followed by processes such as drying and cold pressing, to obtain the positive electrode plate. A type of the solvent may be selected from but not limited to any one of the foregoing implementations, for example, N-methylpyrrolidone (NMP). The surface of the positive electrode current collector coated with the positive electrode slurry may be a single surface of the positive electrode current collector, or two surfaces of the positive electrode current collector.

In some embodiments, the positive electrode plate further includes a positive electrode conductive layer. The positive electrode conductive layer is disposed between the positive electrode current collector and the positive electrode film layer on at least one side. The positive electrode conductive layer includes a conductive agent. The positive electrode conductive layer may also be first applied to the surface of the positive electrode current collector by using a corresponding slurry, and then the above positive electrode slurry is applied, followed by drying, to form the positive electrode plate. The positive electrode conductive layer can improve the binding force between the positive electrode film layer and the positive electrode current collector and the overall conductivity of the positive electrode plate, thereby helping improve the electron transfer rate.

Further, the conductive agent includes at least one of superconducting carbon, conductive graphite, acetylene black, carbon black, Ketjen black, carbon dots, carbon nanotubes, graphene, and carbon nanofibers. The positive electrode conductive agent in the positive electrode conductive layer can improve the conductivity of the positive electrode conductive layer, thereby improving the conductivity of the positive electrode plate and reducing heat generation of the battery.

Further, a thickness of the positive electrode conductive layer is 0.5 $\mu$m to 2 $\mu$m, and as an example, may be 0.5 $\mu$m, 1 $\mu$m, 1.5 $\mu$m, or 2 $\mu$m. When the thickness of the positive electrode conductive layer falls within the above range, the conductivity of the positive electrode plate can be further improved, and the energy density of the battery cell can also be improved.

Further, the positive electrode conductive layer further includes a binder. Further, the binder includes at least one of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, polyacrylic acid, and fluorinated acrylate resin. The binder in the positive electrode conductive layer can improve binding performance between the positive electrode current collector and the positive electrode film layer, and improve the structural stability of the positive electrode plate.

Optionally, in the positive electrode conductive layer, a mass content of the conductive agent is 30% to 50%, and as an example, may be 30%, 35%, 40%, 45%, or 50%. Optionally, in the positive electrode conductive layer, a mass content of the binder is 50% to 70%, and may be 50%, 55%, 60%, 65%, or 70%. In some examples, the positive electrode conductive layer consists of the conductive agent and the binder.

Negative electrode plate

As a non-limiting example, the negative electrode current collector has two opposite surfaces in a thickness direction of the negative electrode current collector, and the negative electrode film layer is disposed on either or both of the two opposite surfaces of the negative electrode current collector.

In some embodiments, the negative electrode current collector may be a metal foil or a composite current collector. For example, in the case of the metal foil, a copper foil may be used. The composite current collector may include a polymer material substrate layer and a metal layer formed on at least one surface of the polymer material substrate. The composite current collector may be obtained by forming the metal material on the polymer material substrate. In the negative electrode current collector, non-limiting examples of the metal material may include at least one of copper, a copper alloy, nickel, a nickel alloy, titanium, a titanium alloy, silver, a silver alloy, and the like. In the negative electrode current collector, non-limiting examples of the polymer material substrate may include at least one of polypropylene (PP), polyethylene terephthalate (PET), polybutylene terephthalate (PBT), polystyrene (PS), polyethylene (PE), and other substrates.

In some embodiments, a compaction density of the negative electrode plate after the secondary battery is charged to 100% SOC at a charging rate of 0.33 C is 1.15 g/cm$^3$ to 1.46 g/cm$^3$, optionally 1.15 g/cm$^3$ to 1.36 g/cm$^3$. In this case, the above negative electrode plate still has a high compaction density after being fully charged. Exemplarily, the compaction density of the negative electrode plate after the secondary battery is charged to 100% SOC at a charging rate of 0.33 C is 1.15 g/cm$^3$, 1.18 g/cm$^3$, 1.20 g/cm$^3$, 1.22 g/cm$^3$, 1.25 g/cm$^3$, 1.28 g/cm$^3$, 1.3 g/cm$^3$, 1.32 g/cm$^3$, 1.35 g/cm$^3$, 1.36 g/cm$^3$, 1.38 g/cm$^3$, 1.4 g/cm$^3$, 1.42 g/cm$^3$, 1.45 g/cm$^3$, or 1.46 g/cm$^3$, or within a range formed by any two of the above values. When the compaction density of the negative electrode film layer falls within the above range, it helps improve the energy density of the battery cell. In addition, because the negative electrode active material in the negative electrode film layer is densely packed and the particle-to-particle contact resistance is small, the resistance of the electrode plate can be further reduced, thereby reducing heat generation.

In the implementations of the present application, the compaction density of the negative electrode plate after the secondary battery is charged to 100% SOC at a charging rate of 0.33 C has a meaning well-known in the art, that is, after a battery cell that is charged to 100% state of charge SOC at a charging rate of 0.33 C is disassembled to obtain a positive electrode plate, a compaction density of a positive electrode film layer is measured.

In the implementations of the present application, the 100% SOC is defined as follows:
The battery cell is charged to the voltage upper limit of the battery at a constant-current charging rate of 0.33 C and then charged to 0.05 C at a constant voltage, which corresponds to a state of 100% SOC of the battery cell. Correspondingly, the battery cell is discharged to a cut-off voltage at a constant-current discharging rate of 0.33 C, which corresponds to a state of 0% SOC of the battery cell.

Because of different types of positive electrode active materials of the battery, the cut-off voltage of full charging may also be different. For example, the charging voltage upper limit of the battery may be 3.65 V or 3.8 V. The discharging cut-off voltage of the battery may be 2.5 V or 2.0 V. Using an example in which the positive electrode active material in the positive electrode plate is lithium iron phosphate, after the above secondary battery is charged to 3.65 V at a charging rate of 0.33 C and then charged at a constant voltage to 0.05 C (that is, after the secondary battery is charged to 100% SOC at a charging rate of 0.33 C), the compaction density of the negative electrode plate is 1.15 g/cm$^3$ to 1.46 g/cm$^3$.

In some embodiments, the compaction density of the above negative electrode plate after cold pressing is 1.5 g/cm$^3$ to 1.7 g/cm$^3$, optionally 1.55 g/cm$^3$ to 1.65 g/cm$^3$. The compaction density of the negative electrode plate after cold pressing is the compaction density of the negative electrode plate after the negative electrode plate is cold pressed and before the negative electrode plate is assembled into a battery.

In some embodiments, the compaction density of the negative electrode plate after the secondary battery is charged to 100% SOC at a charging rate of 0.33 C is 1.15 g/cm$^3$ to 1.26 g/cm$^3$. Moreover, the mass content of the first additive in the electrolyte solution is 3% to 8%.

A lower full-charge compaction density of the negative electrode plate indicates a larger rebound thickness or a lower initial compaction density and a higher graphite activity. Therefore, a large amount of the electrolyte solution needs to be consumed, and a larger amount of additive needs to be added to the electrolyte solution, so as to improve the stability of the interface film of the negative electrode plate and improve the cycling performance of the battery. Therefore, there is a matching relationship between the compaction density of the negative electrode plate and the mass content of the first additive in the electrolyte solution. Thereby, when the compaction density of the negative electrode plate after the secondary battery is charged to 100% SOC at a charging rate of 0.33 C falls within the above range and the mass content of the first additive in the electrolyte solution is 3% to 8%, the battery can better achieve balance between high fast charge performance and high cycling performance.

The film forming resistance of the second additive in the electrolyte solution is low, which can improve the kinetic performance of the battery and further improve the ID fast charge performance of the battery. However, the content of the second additive cannot be excessively high, so as to further improve the cycling performance of the battery. Therefore,

there is a matching relationship between the compaction density of the negative electrode plate and the mass content of the second additive in the electrolyte solution. Further, the compaction density of the negative electrode plate after the secondary battery is charged to 100% SOC at a charging rate of 0.33 C is 1.15 g/cm$^3$ to 1.26 g/cm$^3$, and the mass content of the second additive in the electrolyte solution is 0.5% to 3%.

Further, the compaction density of the negative electrode plate after the secondary battery is charged to 100% SOC at a charging rate of 0.33 C is 1.15 g/cm$^3$ to 1.26 g/cm$^3$, and the mass content of the first solvent in the organic solvent of the electrolyte solution is 30% to 40%.

Further, the compaction density of the negative electrode plate after the secondary battery is charged to 100% SOC at a charging rate of 0.33 C is 1.15 g/cm$^3$ to 1.26 g/cm$^3$, and a mass of the electrolyte solution at unit battery rated capacity of 1 Ah of the secondary battery is 2.5 g to 3.0 g.

In some embodiments, the compaction density of the negative electrode plate after the secondary battery is charged to 100% SOC at a charging rate of 0.33 C is > 1.26 g/cm$^3$ and ≤ 1.36 g/cm$^3$, and the mass content of the first additive in the electrolyte solution is 2.5% to 6.5%. Thereby, when the compaction density of the negative electrode plate after the secondary battery is charged to 100% SOC at a charging rate of 0.33 C falls within the above range and the mass content of the first additive in the electrolyte solution is 2.5% to 6.5%, the battery can better achieve balance between high fast charge performance and high cycling performance.

Further, the compaction density of the negative electrode plate after the secondary battery is charged to 100% SOC at the charging rate of 0.33 C is > 1.26 g/cm$^3$ and ≤ 1.36 g/cm$^3$, and the mass content of the second additive in the electrolyte solution is 1% to 4%. Further, the mass content of the first solvent in the organic solvent of the electrolyte solution is 25% to 38%.

Further, the compaction density of the negative electrode plate after the secondary battery is charged to 100% SOC at a charging rate of 0.33 C is > 1.26 g/cm$^3$ and ≤ 1.36 g/cm$^3$, and the mass of the electrolyte solution at unit battery rated capacity of 1 Ah of the secondary battery is 2.2 g to 2.8 g.

In some embodiments, a charging time of the secondary battery charged from 10% SOC to 80% SOC at 30°C is 6 min to 15 min, a mass content of the carboxylate in the organic solvent is 20% to 75%, and the total mass content of the first additive and the second additive in the electrolyte solution is 2% to 9%. Thereby, based on the fact that the high-compaction-density graphite is used to provide a high energy density and the battery is the fast charge battery, by adding the carboxylate having the above content to the electrolyte solution and increasing the amounts of the first additive and the second additive, the secondary battery has high energy density, fast charge performance, and cycling performance. Further, in the electrolyte solution, the mass content of the first additive is 1.5% to 7%, and the mass content of the second additive is 0.5% to 4%.

In some implementations, the process of charging the secondary battery from 10% state of charge to 80% state of charge includes a plurality of charging steps. A difference between a maximum state of charge in any one of the plurality of charging steps and a maximum state of charge in its adjacent charging step is less than or equal to 5% state of charge, for example, 1% state of charge, 1.5% state of charge, 2% state of charge, 2.5% state of charge, 3% state of charge, 3.5% state of charge, 4% state of charge, 4.5% state of charge, or 5% state of charge, or within a range formed by any two of the above values.

Charging the secondary battery from 10% state of charge to 40% state of charge includes a plurality of charging steps. For any charging step, charging may be performed at any rate from 5 C to 10 C. The charging rate corresponding to each charging step may be any of 5 C, 5.5 C, 6 C, 6.5 C, 7 C, 7.5 C, 8 C, 8.5 C, 9 C, 9.5 C, or 10 C, or a value within a range formed by any two of the above values.

Charging the secondary battery from 40% state of charge to 80% state of charge also includes a plurality of charging steps. A charging rate of any charging step is less than a charging rate of any charging step from 10% state of charge to 40% state of charge, and a charging rate of the step of charging to 80% state of charge is any value from 2.5 C to 5C, for example, may be 2.7 C.

Exemplarily, the step of charging the secondary battery from 10% to 80% may be performed in the following manner:

charging from 10% SOC to 15% SOC at a constant current of 5.0 C;
charging from 15% SOC to 20% SOC at a constant current of 5.0 C;
charging from 20% SOC to 25% SOC at a constant current of 5.0 C;
charging from 25% SOC to 30% SOC at a constant current of 5.0 C;
charging from 30% SOC to 35% SOC at a constant current of 5.0 C;
charging from 35% SOC to 40% SOC at a constant current of 5.0 C;
charging from 40% SOC to 45% SOC at a constant current of 4.6 C;
charging from 45% SOC to 50% SOC at a constant current of 4.3 C;
charging from 50% SOC to 55% SOC at a constant current of 4.0 C;
charging from 55% SOC to 60% SOC at a constant current of 3.7 C;

charging from 60% SOC to 65% SOC at a constant current of 3.4 C;
charging from 65% SOC to 70% SOC at a constant current of 3.1 C;
charging from 70% SOC to 75% SOC at a constant current of 2.9 C; and
charging from 75% SOC to 80% SOC at a constant current of 2.7 C.

In some implementations, the charging time of the secondary battery from 10% state of charge to 80% state of charge is 6 min to 15 min. Exemplarily, the charging time of the secondary battery from 10% state of charge to 80% state of charge is 6 min, 6.5 min, 7 min, 7.5 min, 8 min, 8.5 min, 9 min, 9.5 min, 10 min, 10.5 min, 11 min, 11.5 min, 12 min, 12.5 min, 13 min, 14 min, 14.5 min, or 15 min, or within a range formed by any two of the above values.

In some embodiments, the negative electrode plate further includes a negative electrode conductive layer. The negative electrode conductive layer is disposed between the negative electrode current collector and the negative electrode film layer on at least one side. The negative electrode conductive layer can improve the overall conductivity of the negative electrode plate, thereby helping improve the electron transfer rate.

The negative electrode conductive layer includes a conductive agent. The negative electrode conductive layer may also be first applied to the surface of the negative electrode current collector by using a corresponding slurry, and then the above negative electrode slurry is applied, followed by drying, to form the negative electrode plate. Further, the conductive agent in the negative electrode conductive layer includes at least one of superconducting carbon, conductive graphite, acetylene black, carbon black, Ketjen black, carbon dots, carbon nanotubes, graphene, and carbon nanofibers.

Optionally, the thickness of the negative electrode conductive layer is 0.5 μm to 2 μm, and as an example, may be 0.5 μm, 1 μm, 1.5 μm, or 2 μm, or within a range formed by any two of the above values. When the thickness of the negative electrode conductive layer falls within the above range, the conductivity of the negative electrode plate can be further improved, and heat generation of the negative electrode plate can be reduced, thereby reducing heat generation of the battery cell. In addition, the energy density of the battery cell can be improved.

In some embodiments, the negative electrode conductive layer includes a binder. The binder includes at least one of styrene-butadiene rubber (SBR), water-soluble unsaturated resin, waterborne acrylic resin, polyvinyl alcohol, sodium alginate, and carboxymethyl chitosan. The negative electrode conductive layer can improve the binding force between the negative electrode film layer and the negative electrode current collector and the overall conductivity of the negative electrode plate, thereby helping improve the electron transfer rate.

Optionally, in the negative electrode conductive layer, a mass content of the conductive agent is 20% to 40%, and exemplarily, may be 20%, 25%, 30%, 35%, or 40%, or within a range formed by any two of the above values. Optionally, in the negative electrode conductive layer, the mass content of the binder is 60% to 80%, exemplarily, 60%, 65%, 70%, 75%, or 80%, or within a range formed by any two of the above values.

In some embodiments, the negative electrode film layer further optionally includes a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may include at least one of superconducting carbon, acetylene black, carbon black, Ketjen black, carbon dots, carbon nanotubes, graphene, and carbon nanofibers.

In some embodiments, the negative electrode film layer further optionally includes another adjuvant such as a thickener (for example, sodium carboxymethyl cellulose (CMC-Na)).

In some embodiments, the negative electrode plate may be prepared in the following manner: disperse the above components for preparing the negative electrode plate, for example, the negative electrode active material, the conductive agent, the binder, and any other components, in a solvent (a non-limiting example of the solvent is deionized water) to form a negative electrode slurry; and apply the negative electrode slurry onto a surface on at least one side of a negative electrode current collector, followed by processes such as drying and cold pressing, to obtain the negative electrode plate. The surface of the negative electrode current collector coated with the negative electrode slurry may be a single surface of the negative electrode current collector, or two surfaces of the negative electrode current collector.

Further, the first graphite includes at least one of artificial graphite and natural graphite. Further, the graphite is artificial graphite. The artificial graphite has fewer active sites on the surface and a lower consumption rate of the first solvent and the first additive in the electrolyte solution, so that the requirement on a long life of the battery can be met. Further, a discharging gravimetric capacity of the graphite is ≤ 358 mAh/g. When the gravimetric capacity of the graphite is within this range, the graphite has suitable activity, which helps reduce the consumption rate of the electrolyte solution, thereby improving the cycling performance of the battery.

A Dv50 particle size of the above first graphite is 2.2 μm to 7.7 μm, and as an example, may be 2.2 μm, 2.5 μm, 3 μm, 3.5 μm, 4 μm, 4.2 μm, 4.5 μm, 5 μm, 5.5 μm, 5.8 μm, 6 μm, 6.5 μm, 7 μm, 7.2 μm, 7.5 μm, or 7.7 μm, or within a range formed by any two of the above values. Further, the Dv50 particle size of the first graphite may be 2.2 μm to 7 μm.

In some embodiments, the negative electrode film layer includes at least one negative electrode active layer. The

at least one negative electrode active layer includes the first graphite.

In an embodiment, the negative electrode film layer includes only one negative electrode active layer. The negative electrode active layer contains the first graphite and second graphite. The Dv50 particle size of the first graphite is 4.2 μm to 7.2 μm. A Dv50 particle size of the second graphite is 7.8 μm to 14.8 μm. The first graphite has small particle size range, low compaction density, and high reactivity with the electrolyte solution, and thus, affects the energy density, the cycling performance, and the storage performance of the battery. To further improve the energy density, the cycling performance, and the storage performance of the battery, the second graphite having a large particle size is used in combination in the negative electrode active layer.

As an example, the Dv50 particle size of the second graphite may be 7.8 μm, 8 μm, 8.2 μm, 8.5 μm, 9 μm, 9.2 μm, 9.5 μm, 9.6 μm, 10 μm, 10.2 μm, 10.5 μm, 10.6 μm, 11 μm, 11.8 μm, 12 μm, 12.5 μm, 12.8 μm, 13 μm, 13.5 μm, 13.7 μm, 14 μm, 14.2 μm, 14.5 μm, or 14.8 μm, or within a range formed by any two of the above values.

Further, a mass ratio of the first graphite to the second graphite is 2:8 to 6:4, optionally 3:7 to 5:5. As an example, the mass ratio may be 2:8, 3:7, 4:6, 5:5, or 6:4, or within a range formed by any two of the above values.

Further, the mass content of the first graphite in the negative electrode active layer where the first graphite is located is 20% to 70%. As an example, the mass content of the first graphite in the negative electrode active layer where the first graphite is located is 20%, 25%, 30%, 35%, 40%, 45%, 48%, 50%, 55%, 60%, 65%, or 70%, or within a range formed by any two of the above values.

Further, a total mass content of the first graphite and the second graphite in the negative electrode active layer where the first graphite and the second graphite are located is 30% to 98%. As an example, the total mass content may be 30%, 35%, 40%, 45%, 48%, 50%, 55%, 60%, 65%, 70%, 75%, 80%, 85%, 90%, 95%, 96%, or 98%, or within a range formed by any two of the above values.

Optionally, the mass content of the first graphite in the negative electrode active layer is ≥ 20% and < 50%, and as an example, may be 20%, 25%, 30%, 35%, 40%, 45%, or 48%. Moreover, the total mass content of the first additive and the second additive in the electrolyte solution is 3% to 8%. As an example, the total mass content of the first additive and the second additive may be 3%, 3.5%, 4%, 4.5%, 5%, 5.5%, 6%, 6.5%, 7%, 7.5%, or 8%, or within a range formed by any two of the above values. There is a matching relationship between the content of the first graphite and the content of the additive in the electrolyte solution. With the above setting, the content of the first graphite is more matched with the total mass content of the first additive and the second additive, which can effectively improve the fast charge performance and the cycling performance of the battery.

Optionally, the mass content of the first graphite in the negative electrode active layer is 50% to 70%, and as an example, may be 50%, 55%, 60%, 65%, or 70%, or within a range formed by any two of the above values. Moreover, the total mass content of the first additive and the second additive in the electrolyte solution is 4% to 10%. As an example, the total mass content of the first additive and the second additive may be 4%, 4.5%, 5%, 5.5%, 6%, 6.5%, 7%, 7.5%, 8%, 8.5%, 9%, 9.5%, or 10%, or within a range formed by any two of the above values. A higher content of the first graphite indicates that more additive needs to be correspondingly added to the electrolyte solution. In this way, the content of the first graphite is more matched with the total mass content of the first additive and the second additive, and the fast charge performance and the cycling performance of the battery can be effectively improved.

In another embodiment, the negative electrode film layer includes a first negative electrode active layer and a second negative electrode active layer that are sequentially stacked on a same side of the negative electrode current collector. The graphite includes at least one of artificial graphite and natural graphite. The graphite in the first negative electrode active layer includes at least one of the artificial graphite and the natural graphite. The second negative electrode active layer includes the first graphite and third graphite. The first graphite includes the artificial graphite. A Dv50 particle size of the third graphite is 7.8 μm to 14.8 μm. The artificial graphite has fewer active sites on the surface and a lower consumption rate of the first solvent and the first additive in the electrolyte solution. The first graphite is disposed in the upper second negative electrode active layer, and the third graphite having a large particle size is added to the second negative electrode active layer, which further improves the energy density, the cycling performance, and the storage performance of the battery.

Optionally, in the second negative electrode active layer, a mass ratio of the first graphite to the third graphite is 2:8 to 8:2, optionally 3:7 to 7:3. As an example, the mass ratio may be 2:8, 3:7, 4:6, 5:5, 6:4, or 7:3, or within a range formed by any two of the above values.

Further, a mass content of the first graphite in the second negative electrode active layer is 20% to 70%. As an example, the mass content of the first graphite in the negative electrode active layer where the first graphite is located is 20%, 25%, 30%, 35%, 40%, 45%, 48%, 50%, 55%, 60%, 65%, or 70%, or within a range formed by any two of the above values.

Optionally, the mass content of the first graphite in the second negative electrode active layer is ≥ 20% and < 50%, and as an example, may be 20%, 25%, 30%, 35%, 40%, 45%, or 48%. Moreover, the total mass content of the first additive and the second additive in the electrolyte solution is 3% to 7%. As an example, the total mass content of the first additive and the second additive may be 3%, 3.5%, 4%, 4.5%, 5%, 5.5%, 6%, 6.5%, or 7%, or within a range formed by any two of

the above values. There is a matching relationship between the content of the first graphite and the content of the additive in the electrolyte solution. With the above setting, the content of the first graphite is more matched with the total mass content of the first additive and the second additive, which can effectively improve the fast charge performance and the cycling performance of the battery.

Optionally, the mass content of the first graphite in the second negative electrode active layer is 50% to 70%, and as an example, may be 50%, 55%, 60%, 65%, or 70%, or within a range formed by any two of the above values. Moreover, the total mass content of the first additive and the second additive in the electrolyte solution is 3.5% to 8%. As an example, the total mass content of the first additive and the second additive may be 3.5%, 4%, 4.5%, 5%, 5.5%, 6%, 6.5%, 7%, 7.5%, or 8%. A higher content of the first graphite indicates that more additive needs to be correspondingly added to the electrolyte solution. In this way, the content of the first graphite is more matched with the total mass content of the first additive and the second additive, and the fast charge performance and the cycling performance of the battery can be effectively improved.

Further, the Dv50 particle size of the graphite in the first negative electrode active layer is equal to or greater than the Dv50 particle size of the first graphite in the second negative electrode active layer. Further, the Dv50 particle size of the graphite in the first negative electrode active layer is greater than the Dv50 particle size of the graphite in the second negative electrode active layer. The first graphite is disposed in the upper second negative electrode active layer. Because the distance between the negative electrode active material particles in the upper second negative electrode active layer is reduced, the contact area between the negative electrode active material particles is increased, conducting channels and bridges are increased, and the active area capable of participating in a reaction is increased, thereby significantly improving the specific capacity and the fast charge performance of the battery. The graphite having a large particle size is added to the lower first negative electrode active layer, and therefore, the first negative electrode active layer has large pores and good electrolyte solution wetting performance, which can further help improve the fast charge performance and the cycling performance of the battery.

Further, the Dv50 particle size of the graphite in the first negative electrode active layer is 5.8 μm to 12.8 μm, optionally 7.8 μm to 12.8 μm. As an example, the Dv50 particle size of the graphite in the first negative electrode active layer may be 5.8 μm, 6 μm, 6.5 μm, 7 μm, 7.5 μm, 8 μm, 8.5 μm, 9 μm, 9.5 μm, 10 μm, 10.5 μm, 11 μm, 12 μm, 13 μm, 14 μm, 14.5 μm, 14.8 μm, 15 μm, 16 μm, 17 μm, 18 μm, or 18.5 μm, or within a range formed by any two of the above values.

Further, the Dv50 particle size of the first graphite in the second negative electrode active layer is 2.2 μm to 7.7 μm, optionally 4.2 μm to 7.2 μm.

Further, a proportion of the thickness of the second negative electrode active layer in a total thickness of the first negative electrode active layer and the second negative electrode active layer is 30% to 70%, and for example, may be 30%, 40%, 50%, 60%, or 70%, or within a range formed by any two of the above values.

It can be understood that the first negative electrode active layer and the second negative electrode active layer may be obtained by sequentially stacking and applying two slurries, and then performing processes such as drying and cold pressing.

In some embodiments, the artificial graphite includes graphite body particles and a coating layer. The graphite body particle includes a secondary particle formed by aggregation of a plurality of primary particles. The coating layer coats a surface of the body particle. The coating layer includes amorphous carbon. The amorphous carbon refers to a transitional carbon material with a very low degree of crystallization of graphite, approximately in a non-crystalline form (or without a fixed shape or a periodic structural pattern). In the present application, the amorphous carbon refers to a product after carbonization of an organic carbon source.

The graphite body particle includes the secondary particle. Therefore, there are many migration paths of lithium ions in the artificial graphite, and migration paths in the primary particles are short, which can improve the migration rate of the lithium ions. The amorphous carbon layer has lots of end surfaces and defects, so that there are lots of sites where lithium ions can be deintercalated. Therefore, the amorphous carbon layer has excellent conductivity, and can reduce the internal resistance of the negative electrode plate and the heat generation of the battery cell.

Further, based on a total mass of the artificial graphite, a mass content of the amorphous carbon is 2% to 5%. Exemplarily, the mass content of the amorphous carbon layer is 2%, 2.5%, 3%, 3.5%, 4%, 4.5%, or 5%, or within a range formed by any two of the above values.

When the mass content of the amorphous carbon layer falls within the above range, the internal resistance of the negative electrode plate can be further reduced, and the heat generation of the battery cell can be reduced.

In the implementations of the present application, the artificial graphite may be prepared by using a method known in the art. For example, the preparation method includes: providing graphite body particles and an organic carbon source, mixing the graphite body particles and the organic carbon source, and forming the amorphous carbon layer on at least part of surfaces of the graphite body particles by carbonization.

Optionally, the organic carbon source includes one or more of coal tar pitch, petroleum pitch, phenolic resin, and coconut shell. Further optionally, the organic carbon source includes petroleum pitch. Optionally, a softening point of the coal tar pitch or the petroleum pitch is 250°C or lower.

Optionally, the carbonization is performed at a temperature of 700°C to 1800°C. Optionally, the carbonization is performed at a temperature of 1000°C to 1300°C. When the carbonization temperature is within a suitable range, the organic carbon source can be carbonized, and the coating layer including the amorphous carbon can be formed on at least parts of the surfaces of the artificial graphite.

Optionally, the carbonization is performed for 1 h to 6 h.

Further, a powder resistivity of the artificial graphite is ≤ 0.04 Ω•cm.

In some embodiments, a gravimetric capacity of the graphite in a button battery charged at a rate of 0.1 C is ≥ 350 mAh/g, optionally 350 mAh/g to 440 mAh/g.

In some embodiments, in addition to the above graphite, the negative electrode active material may include a silicon-based material. The silicon-based material introduced can significantly improve the capacity of the negative electrode active material and increase the energy density of the battery cell.

Further, the silicon-based material may include at least one of silicon-oxygen compounds and silicon-carbon composites.

Further, in the negative electrode active material, a mass content of silicon in the silicon-based material is 0.3% to 10%, optionally 1% to 6%. Exemplarily, the mass content of the silicon in the silicon-based material is 0.3%, 0.5%, 0.8%, 1%, 1.2%, 1.5%, 1.8%, 2%, 2.2%, 2.5%, 2.8%, 3%, 3.2%, 3.5%, 3.8%, 4%, 4.2%, 4.5%, 4.8%, 5%, 5.2%, 5.5%, 5.8%, 6%, 6.2%, 6.5%, 6.8%, 7%, 7.2%, 7.5%, 7.8%, 8%, 8.2%, 8.5%, 8.8%, 9%, 9.2%, 9.5%, 9.8%, or 10%, or within a range formed by any two of the above values.

The qualitative and quantitative properties of each substance or element in the present application can be detected using appropriate equipment and methods known to those skilled in the art. The relevant detection methods can refer to Chinese and foreign detection standards, Chinese and foreign enterprise standards, etc., and those skilled in the art can also adapt certain detection steps/instrument parameters, etc., in view of the detection accuracy to obtain more accurate detection results. A single detection method can be used for qualitative or quantitative determination, or a combination of several detection methods can be used for qualitative or quantitative determination.

Separator

In some embodiments, the secondary battery further includes a separator. The separator is disposed between the positive electrode plate and the negative electrode plate to mainly play a role in preventing a short circuit between a positive electrode and a negative electrode while allowing ions to pass through.

In some embodiments, the positive electrode plate, the negative electrode plate, and the separator may be made into an electrode assembly by a winding process or a laminating process.

The type of the separator is not specifically limited in the present application, and any well-known separator with a porous structure having good chemical stability and mechanical stability may be selected. The separator can be either a single-layer thin film or a multi-layer composite thin film, which is not particularly limited. When the separator is a multi-layer composite thin film, the materials of the layers can be the same or different, which is not particularly limited. In some implementations, a thickness of the separator is 6 μm to 40 μm, optionally 12 μm to 20 μm.

In some embodiments, the separator includes a porous base film and a functional layer disposed on at least one side of the porous base film.

Further, a material of the porous base film may include at least one of glass fiber, non-woven fabric, and polyolefin. Optionally, the polyolefin includes at least one of polyethylene, polypropylene, and polyvinylidene fluoride.

Further, the thickness of the porous base film is ≤ 12 μm, optionally ≤ 9 μm, optionally from 6 μm to 9 μm. Exemplarily, the thickness of the base film is 6 μm, 6.5 μm, 7 μm, 7.5 μm, 8 μm, 8.5 μm, 9 μm, 9.5 μm, 10 μm, 10.5 μm, 11 μm, 11.5 μm, or 12 μm, or within a range formed by any two of the above values.

When the porosity of the separator in the implementations of the present application falls within the above range, the migration capability of lithium ions in the separator can be improved, and the internal resistance of the battery cell can be further reduced, thereby reducing heat generation.

In the implementations of the present application, the porosity refers to a percentage of the volume of pores in the separator to the total volume of the separator. The porosity may be tested according to the standard GB/T 36363-2018, *Polyolefin Separator for Battery Cell.* It should be noted that, the actual testing process may be a testing process slightly different from the standard according to test instrument differences and test errors and in order to eliminate the impact on porosity testing as much as possible, so as to obtain a more accurate test value.

Further, the porosity of the porous base film is 20% to 70%, optionally 35% to 60%. Exemplarily, the porosity of the base film is 20%, 25%, 30%, 35%, 40%, 45%, 50%, 55%, 60%, 65%, or 70%, or within a range formed by any two of the above values.

When the thickness of the porous base film falls within the above range, migration paths of lithium ions in the base film are short, so that the internal resistance of the battery cell can be further reduced, thereby reducing heat generation.

In the implementations of the present application, the separator may be the base film. Optionally, the separator

further includes a functional layer disposed on at least one side of the base film, and the functional layer may include inorganic particles, to improve heat resistance of the separator. Optionally, the functional layer is disposed on two sides of the base film.

In some implementations, the functional layer includes a first functional layer and a second functional layer. The first functional layer is located on one side of the base film. The first functional layer includes first inorganic particles. The second functional layer is located on the other side of the base film. The second functional layer includes composite particles. The composite particles include second inorganic particles and a plurality of non-fluoropolymer particles. The second inorganic particles are attached to a surface of the non-fluoropolymer particles and/or dispersed inside the non-fluoropolymer particles.

The first functional layer and the second functional layer have good heat resistance, and can improve the heat resistance of the separator.

Optionally, the first functional layer may include a binder, and optionally includes a fluorine-containing binder or a polyacrylic acid binder, such as polyvinylidene fluoride.

Optionally, the first inorganic particles include one or more of silica, alumina, boehmite, barium sulfate, calcium oxide, titanium oxide, zinc oxide, magnesium oxide, zirconium oxide, and tin oxide. The above first inorganic particles can improve the heat resistance of the first functional layer.

In the implementations of the present application, the thickness of the base film has a meaning well-known in the art, and may be measured by using a meaning and a device well-known in the art. For example, a freshly prepared separator may be used as a sample; or a battery cell that has been discharged (discharged to the cut-off voltage lower limit, so that the state of charge of the battery is approximately 0% SOC) is reversely disassembled to obtain the separator from the battery cell, and the separator is used as a sample after being dried. The separator is cut by using an ion beam cutter, to form a section. Subsequently, the thickness of the section of the separator and the thickness of the section of each layer of the separator are measured by using a scanning electron microscope.

The non-fluoropolymer particles in the second functional layer means that the polymer is a non-fluoropolymer. For example, the non-fluoropolymer particles include an acrylate copolymer. Optionally, the acrylate copolymer includes an acrylate-acrylonitrile-acrylamide-propylene copolymer, and has excellent binding performance and high binding stability with the base film. A molar ratio of monomers in the copolymer may be any ratio, such as 35%:30%:15%:20%, or 40%, 20%, 10%, 30%, or 45%, 15%, 20%, 20%.

The second inorganic particles in the composite particles make it difficult for the non-fluoropolymer particles to bind to each other due to high-temperature treatment during granulation, so that the composite particles have pores, thereby facilitating transfer of lithium ions and improving the ion conducting capability of the separator. In addition, the second inorganic particles can improve the compression modulus of the composite particles. In the charging and discharging process, the composite particles are not easily deformed, so that the structure of the separator is more stable, which can improve the kinetic performance of the battery cell and improve the fast charge performance. Optionally, compared with the first functional layer, the second functional layer is disposed close to the negative electrode plate. Because the composite particles are not easily deformed, the separator basically does not cause a side effect such as squeezing on the negative electrode plate, so that the kinetic performance of the negative electrode plate is stable. Correspondingly, the first functional layer is disposed close to the positive electrode plate.

Optionally, the second inorganic particles include one or more of silica, alumina, boehmite, barium sulfate, calcium oxide, titanium oxide, zinc oxide, magnesium oxide, zirconium oxide, and tin oxide. Optionally, the second inorganic particles include silica. The above second inorganic particles can improve the heat resistance of the second functional layer, and can be combined with the non-fluoropolymer to form the composite particles, which further improves the cycling stability and the kinetic performance of the separator and improves the cycling performance and the fast charge performance of the battery cell.

An average particle size of the second inorganic particles is 5 nm to 100 nm, optionally 10 nm to 100 nm, optionally 5 nm to 20 nm. Exemplarily, the average particle size of the second inorganic particles is 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, or 100 nm, or within a range formed by any two of the above values. When the average particle size of the second inorganic particles falls within the above range, it helps improve the heat resistance and the compression modulus of the composite particles.

In the implementations of the present application, the average particle size of the second inorganic particles has a meaning well-known in the art, and may be measured by using a device and a method well-known in the art. For example, after the separator is obtained, the separator is used as a sample after being dried. The separator is cut by using an ion beam cutter, to form a section. Subsequently, particle sizes of the second inorganic particles in the separator is measured by using a scanning electron microscope, for example, particle sizes of a plurality of, for example, 50, second inorganic particles are measured. The average of the particle sizes is calculated and used as the average particle size of the second inorganic particles.

In some implementations, an ion conductivity of the separator is 0.3 mS/cm to 0.6 mS/cm. Exemplarily, the ion conductivity of the separator is 0.3 mS/cm, 0.35 mS/cm, 0.4 mS/cm, 0.45 mS/cm, 0.5 mS/cm, 0.55 mS/cm, or 0.6 mS/cm,

or within a range formed by any two of the above values.

When the ion conductivity of the separator falls within the above range, the migration capability of lithium ions of the separator can be further improved, and the fast charge performance of the battery cell can be improved.

In the implementations of the present application, the ion conductivity of the separator has a meaning well-known in the art and can be measured by using a device and a method well-known in the art. For example, preparation of CR2025 button battery for testing: In a vacuum glove box, a lithium tablet is put into a negative electrode case of the battery, and 150 $\mu$L of electrolyte solution is added to the negative electrode case, where the electrolyte solution is a solution of 1 M $LiPF_6$ in EC/EMC/DEC=3/5/2 (mass ratio); then a separator (having an area of 3.14 $cm^2$ and a thickness of 12 $\mu$m) is put in and adheres to the lithium tablet, followed by the addition of 25 $\mu$L of electrolyte solution; and finally, a positive electrode plate (the positive electrode plate may be the positive electrode plate in Embodiment 1) is put thereon, followed by encapsulation. The assembled button battery is taken out of the vacuum glove box, and let sit for 24 h, for testing subsequently.

Test: In an electrochemical workstation, the test is performed within a frequency range of $10^{-1}$ Hz to $10^6$ Hz to obtain a resistance of the separator, and the ion conductivity $\sigma$ (in mS/cm) is calculated by using the following formula:

$$\sigma=L/(R_b\times S)$$

where $R_b$ is an equivalent resistance, and L and S are respectively a thickness and an area of the to-be-tested separator.

The secondary battery includes at least one battery cell. The secondary battery may include 1 or more battery cells.

In the present application, unless otherwise specified, the "battery cell" refers to a basic unit that can implement mutual conversion between chemical energy and electric energy, and further, typically includes at least a positive electrode plate, a negative electrode plate, and an electrolyte. In the charging and discharging process of the battery, active ions are intercalated and deintercalated back and forth between the positive electrode plate and the negative electrode plate. The electrolyte functions to conduct active ions between the positive electrode plate and the negative electrode plate.

The shape of the battery cell is not particularly limited in the present application, and may be a cylinder, a square, or any other shapes. For example, the secondary battery shown in FIG. 1 is a battery cell, which is used as an example of a battery cell 5 having a square structure.

In some embodiments, the battery cell 5 may include an outer package. The outer package may be used for encapsulating the above electrode assembly and the electrolyte solution. In some embodiments, the outer package of the battery cell 5 may be a hard case, such as a hard plastic case, an aluminum case, or a steel case. The outer package of the battery cell 5 may also be a soft package, such as a pouch-type soft package. A material of the soft package may be plastic, and further, a non-limiting example of the plastic may include at least one of polypropylene, polybutylene terephthalate, poly(butylene succinate), etc.

In some embodiments, referring to FIG. 2, the outer package may include a case 51 and a cover plate 53. The case 51 may include a bottom plate and side plates connected to the bottom plate. An accommodating cavity is formed by the bottom plate and the side plates. The case 51 has an opening in communication with the accommodating cavity, and the cover plate 53 can cover the opening to close the accommodating cavity. The positive electrode plate, the negative electrode plate, and the separator may be made into an electrode assembly 52 by a winding process or a laminating process. The electrode assembly 52 is encapsulated in the accommodating cavity. The electrolyte solution infiltrates into the electrode assembly 52. The number of electrode assemblies 52 contained in the battery cell 5 may be one or more and can be selected by those skilled in the art according to actual requirements.

In some embodiments, the secondary battery may be a battery module or a battery pack. The battery module includes at least one battery cell. The number of battery cells contained in the battery module may be one or more, and an appropriate number can be selected by those skilled in the art based on the application and capacity of the battery module.

The secondary battery shown in FIG. 3 is a battery module, which serves as an exemplary battery module 4. Referring to FIG. 3, in the battery module 4, a plurality of battery cells 5 may be arranged in sequence in a length direction of the battery module 4. Certainly, the plurality of battery cells may alternatively be arranged in any other manners. The plurality of battery cells 5 may be further fixed by fasteners.

Optionally, the battery module 4 may further include a case having an accommodating space, in which the plurality of battery cells 5 are accommodated.

In some embodiments, the above battery module may further be assembled into a battery pack. The number of battery modules contained in the battery pack may be one or more, and an appropriate number may be selected by those skilled in the art according to the application and capacity of the battery pack.

The secondary battery shown in FIG. 4 and FIG. 5 is a battery pack, which serves an exemplary battery pack 1. Referring to FIG. 4 and FIG. 5, the battery pack 1 may include a battery box and a plurality of battery modules 4 disposed in the battery box. The battery box includes an upper box 2 and a lower box 3. The upper box 2 can cover the lower box 3 to

form a closed space for accommodating the battery modules 4. The plurality of battery modules 4 may be arranged in the battery box in any manner.

In addition, an implementation of the present application provides a power consuming apparatus. The power consuming apparatus includes the above secondary battery provided in the present application. The secondary battery may be used as a power supply of the power consuming apparatus, and may also be used as an energy storage unit of the power consuming apparatus. The power consuming apparatus may include a mobile device, an electric vehicle, an electric train, a ship, a satellite, and an energy storage system, but is not limited thereto. The mobile device may be, for example, a mobile phone and a laptop; and the electric vehicle may be, for example, without limitation, an all-electric vehicle, a hybrid electric vehicle, a plug-in hybrid electric vehicle, an electric bicycle, an electric scooter, an electric golf cart, and an electric truck.

For the power consuming apparatus, the secondary battery can be selected according to the requirements during use.

FIG. 6 shows a power consuming apparatus 6 as an example. The power consuming apparatus is an all-electric vehicle, a hybrid electric vehicle, a plug-in hybrid electric vehicle, or the like. To meet the need of the power consuming apparatus for a high power and high energy density of secondary batteries, a battery pack or a battery module can be used.

As another example, the apparatus may be a mobile phone, a tablet, a laptop, or the like. The device is generally required to be light and thin and can use a battery cell 5 as a power source.

To make the technical problems to be solved by the present application, the technical solutions, and the beneficial effects clearer, the present application is further described below in detail with reference to the embodiments and the accompanying drawings. It is apparent that the described embodiments are a part of the embodiments of the present application, rather than all of the embodiments. The following descriptions on at least one exemplary embodiment are actually merely illustrative, and are not intended to limit the present application and the application thereof. All other embodiments obtained by a person of ordinary skill in the art based on the embodiments of the present application without creative efforts shall fall within the protection scope of the present application.

Where no specific technologies or conditions are indicated in the embodiments, the technologies or conditions described in the literatures in the art or the instructions for the product are followed. The reagents or instruments without manufacturer indicated are all conventional products that may be purchased on the market.

Embodiment 1

(1) Preparation of positive electrode plate:

A positive electrode active material included lithium iron phosphate and an ion conducting layer. The ion conducting layer coated a surface of the lithium iron phosphate, and the ion conducting layer included lithium iron titanium phosphate $Li_2FeTi(PO_4)_3$ and amorphous carbon. The positive electrode active material has a Dv50 of 1.6 μm and a Dv10 of 0.64 μm. A powder compaction density at 30000 N was 2.53 g/cm$^3$.

A positive electrode current collector was an aluminum foil having a thickness of 10 μm, and a positive electrode conductive layer was disposed on the positive electrode current collector. The positive electrode conductive layer was formed by uniformly mixing conductive carbon SP, polyvinylidene fluoride (PVDF) as a binder, and N-methylpyrrolidone (NMP) as a solvent and then applying the mixture to a surface of the current collector, and had a thickness of 1 μm.

The lithium iron phosphate $LiFePO_4$ as the positive electrode active material, the polyvinylidene fluoride as the binder, and acetylene black as a conductive agent were mixed in a mass ratio of 97:2:1, followed by the addition of the N-methylpyrrolidone (NMP) as the solvent, and the mixture was uniformly mixed to obtain a positive electrode slurry. The positive electrode slurry was uniformly applied on the positive electrode conductive layer of the positive electrode current collector, followed by drying and cold pressing, to obtain the positive electrode plate. The positive electrode plate included the positive electrode current collector, and the positive electrode conductive layer and a positive electrode film layer sequentially disposed on the positive electrode current collector.

Based on a mass of the positive electrode film layer, a single-side coating weight of the positive electrode plate was 300 mg/1540.25 mm$^2$. A compaction density of the positive electrode plate after the battery was charged to 100% SOC at a charging rate of 0.33 C was 2.63 g/cm$^3$.

The charging of the battery to 100% SOC at a charging rate of 0.33 C was performed in the following manner: The battery cell was charged to a voltage upper limit (3.65 V) of the battery at a constant-current charging rate of 0.33 C and then charged to 0.05 C at a constant voltage, corresponding to a state of 100% SOC of the battery cell.

(2) Preparation of negative electrode plate:

A preparation method of a negative electrode plate having a double-layer structure was as follows:

Dv50 particle sizes of first graphite, second graphite, and third graphite were respectively 5.8 μm, 9.6 μm, and 9.6 μm.

A negative electrode current collector was a copper foil having a thickness of 5 μm, and a negative electrode conductive layer was disposed on the negative electrode current collector. The negative electrode conductive agent was formed by uniformly mixing conductive carbon SP, SBR as a binder, CMC as a dispersant, and water as a solvent and then applying the mixture to a surface of the current collector, and had a thickness of 1 μm.

The third graphite as a negative electrode active material, acetylene black as a conductive agent, styrene-butadiene rubber as a binder, and sodium carboxymethyl cellulose as a thickener were mixed in a mass ratio of 96:0.5:2.5:1, followed by the addition of deionized water as a solvent, and the mixture was uniformly mixed to obtain a first negative electrode slurry.

The first graphite and the second graphite as a negative electrode active material, acetylene black as a conductive agent, styrene-butadiene rubber as a binder, and sodium carboxymethyl cellulose as a thickener were mixed in a mass ratio of 54.9:41.1:0.5:2.5:1, followed by the addition of deionized water as a solvent, and the mixture was uniformly mixed to obtain a second negative electrode slurry.

The first negative electrode slurry was uniformly applied on the negative electrode conductive layer of a copper foil as a negative electrode current collector and dried. The second negative electrode slurry was applied on a surface of the dried first negative electrode slurry, followed by drying and cold pressing, to obtain the negative electrode plate. The negative electrode plate includes the negative electrode current collector, and the negative electrode conductive layer and a negative electrode film layer sequentially disposed on the negative electrode current collector. The negative electrode film layer includes a first negative electrode active layer and a second negative electrode active layer sequentially disposed on the negative electrode conductive layer.

Based on a total mass of the negative electrode film layer, a single-side coating weight of the negative electrode plate was 138 mg/mm$^2$. A compaction density of the positive electrode plate after the battery was charged to 100% SOC at a charging rate of 0.33 C was 1.2 g/cm$^3$. Based on a total mass of the first graphite, the second graphite, and the third graphite in the negative electrode film layer, mass percentages of the first graphite, the second graphite, and the third graphite were respectively 40%, 30%, and 30%.

(3) Preparation of electrolyte solution:

In an argon glove box with a water content of < 10 ppm, ethylene carbonate (EC) as a first solvent, ethyl acetate (EA) as a second solvent, and dimethyl carbonate (DMC) were uniformly mixed in a certain mass ratio to obtain an organic solvent. Mass contents of the ethylene carbonate (EC), the ethyl acetate (EA), and the dimethyl carbonate (DMC) in the organic solvent were respectively 25%, 50%, and 25%, as shown in Table 1. A certain mass of lithium hexafluorophosphate ($LiPF_6$) as a lithium salt was lowly added, and the mixture was fully mixed until the lithium hexafluorophosphate was completely dissolved. A concentration of the $LiPF_6$ in the electrolyte solution was 1 mol/L. After the temperature was restored to normal temperature, vinylene carbonate (VC) as a first additive, accounting for 6% of the total mass of the electrolyte solution, and fluoroethylene carbonate (FEC) as a second additive, accounting for 4% of the total mass of the electrolyte solution were added, and the mixture was fully and uniformly mixed to obtain the electrolyte solution. A mass b of the electrolyte solution at unit battery rated capacity 1 Ah of the secondary battery was 2.65 g, as shown in Table 1.

(4) Separator:

The separator included a base film. The base film was a 7 μm polyethylene film layer having a porosity of 42%.

(5) Preparation of secondary battery:

The positive electrode plate, the separator, and the negative electrode plate were stacked in sequence and wound to obtain a wound electrode assembly; the electrode assembly was added to an outer package, namely a square aluminum case, and dried, and the electrolyte solution was injected, followed by processes such as encapsulation, standing, formation, aging, secondary encapsulation, and capacity, to obtain the secondary battery.

Preparation methods of Embodiments 2 to 4 are similar to the preparation method of Embodiment 1, except that: the mass content of the ethylene carbonate (EC) as the first solvent in the organic solvent was adjusted (the mass content of the dimethyl carbonate (DMC) was adjusted accordingly), as shown in Table 1.

Preparation methods of Embodiments 5 to 8 are similar to the preparation method of Embodiment 2, except that: the mass content of the VC as the first additive in the electrolyte solution was adjusted, as shown in Table 1.

Preparation methods of Embodiments 9 to 13 are similar to the preparation method of Embodiment 2, except that:

the mass content of the FEC as the second additive in the electrolyte solution was adjusted, as shown in Table 1.
A preparation method of Embodiment 14 is similar to the preparation method of Embodiment 2, except that: the type and content of the second solvent were adjusted, and the single-side coating weights of the active layers of the positive electrode plate and the negative electrode plate were also adjusted, as shown in Table 1.
Preparation methods of Embodiments 15 to 17 are similar to the preparation method of Embodiment 2, except that: the type of the first graphite as the negative electrode active material was adjusted, i.e., the Dv50 parameter was different, as shown in Table 1.
Preparation methods of Embodiments 18 to 19 are similar to the preparation method of Embodiment 10, except that: the injection coefficient of the electrolyte solution was adjusted, so the mass b of the electrolyte solution at unit battery rated capacity 1Ah of the secondary battery was different, and the mass content of the first additive in the electrolyte solution was also adjusted, as shown in Table 1.

Embodiment 19

A preparation method is similar to the preparation method of Embodiment 3, except that: the negative electrode plate had a single-layer structure. The preparation method is as follows:
The first graphite and the second graphite as a negative electrode active material, acetylene black as a conductive agent, styrene-butadiene rubber as a binder, and sodium carboxymethyl cellulose as a thickener were mixed in a mass ratio of 38.4:57.6:0.5:2.5:1, followed by the addition of deionized water as a solvent, and the mixture was uniformly mixed to obtain a negative electrode slurry. The negative electrode slurry was uniformly applied on a negative electrode conductive layer of a copper foil as a negative electrode current collector, followed by drying and cold pressing, to obtain the negative electrode plate.
The negative electrode plate included the negative electrode current collector, and the negative electrode conductive layer and a negative electrode active layer sequentially disposed on the negative electrode current collector.
Based on a total mass of the negative electrode active layer, a single-side coating weight of the negative electrode plate was 138 $mg/mm^2$. A compaction density of the positive electrode plate after the battery was charged to 100% SOC at a charging rate of 0.33 C was 1.2 $g/cm^3$. Based on a total mass of the first graphite and the second graphite in the negative electrode active layer, mass percentages of the first graphite and the second graphite were respectively 40% and 60%.
Preparation methods of Comparative Examples 1 to 5 are similar to the preparation method of Embodiment 3, except that: at least one of the mass content of the ethylene carbonate (EC) in the organic solvent and the mass content of the first additive and the first additive in the electrolyte solution was adjusted, as shown in Table 1.
The following describes performance tests.

(I) Test steps of a capacity retention rate of the battery after 1000 cycles at 60°C are as follows:
At 60°C, the battery was charged to a charging cut-off voltage of 3.65 V at a constant current of 1 C, let sit for 30 min, and then discharged to 2.0 V at a constant current of 1 C, which is one charge-discharge cycle. A capacity C0 after the first cycle was recorded. The above charge-discharge cycle steps were repeated until the number of the cycles reached 1000. The corresponding capacity Cn after the $1000^{th}$ cycle was recorded, to obtain the capacity retention rate after 1000 cycles at 60°C according to Cn/C0×100%. A higher capacity retention rate indicates better cycling performance of the battery.
(II) Test steps of a charging time T of the secondary battery from 10% SOC to 80% SOC at 30°C are as follows:

charging the battery from 10% SOC at an ambient temperature of 30°C:
charging from 10% SOC to 15% SOC at a constant current of 5.0 C;
charging from 15% SOC to 20% SOC at a constant current of 5.0 C;
charging from 20% SOC to 25% SOC at a constant current of 5.0 C;
charging from 25% SOC to 30% SOC at a constant current of 5.0 C;
charging from 30% SOC to 35% SOC at a constant current of 5.0 C;
charging from 35% SOC to 40% SOC at a constant current of 5.0 C;
charging from 40% SOC to 45% SOC at a constant current of 4.6 C;
charging from 45% SOC to 50% SOC at a constant current of 4.3 C;
charging from 50% SOC to 55% SOC at a constant current of 4.0 C;
charging from 55% SOC to 60% SOC at a constant current of 3.7 C;
charging from 60% SOC to 65% SOC at a constant current of 3.4 C;
charging from 65% SOC to 70% SOC at a constant current of 3.1 C;
charging from 70% SOC to 75% SOC at a constant current of 2.9 C; and
charging from 75% SOC to 80% SOC at a constant current of 2.7 C; and

recording the total charging time.

(III) Test steps of a capacity retention rate of the battery after 1000 cycles at 30°C are as follows:
At 30°C, the battery was charged to from 10% SOC to 80% SOC according to the rates corresponding to the above different SOCs, charged to 3.65 V at a constant-current charging rate of 0.33 C, let sit for 30 min, and then discharged to 2.0 V at a constant current of 1 C, which is one charge-discharge cycle. A capacity C0 after the first cycle was recorded. The above charge-discharge cycle steps were repeated until the number of the cycles reached 1000. The corresponding capacity Cn after the $1000^{th}$ cycle was recorded, to obtain the capacity retention rate after 1000 cycles at 30°C according to Cn/C0×100%. A higher capacity retention rate indicates better cycling performance of the battery.

Some parameters of the embodiments and the comparative examples are shown in Table 1. The content is mass content, and the unit of the single-side coating weight of the positive electrode and the negative electrode is mg/1540.25 $mm^2$.
The results of the above performance tests of the embodiments and the comparative examples are shown in Table 2.

Table 1

| No. | Electrolyte solution | | | | | Single-side coating weight of positive electrode | Compaction density of positive electrode plate after full charge, g/cm$^3$ | Dv50 of first graphite | Single-side coating weight of negative electrode | Mass b/g of electrolyte solution at capacity 1 Ah |
|---|---|---|---|---|---|---|---|---|---|---|
| | First solvent | Type and content of second solvent | | First additive VC, content | Second additive, content | | | | | |
| | EC content | | | | | | | | | |
| Embodiment 1 | 25% | EA, 50% | DMC, 25% | 6% | FEC, 4% | 300 | 2.63 | 5.8 μm | 138 | 2.65 |
| Embodiment 2 | 30% | EA, 50% | DMC, 20% | 6% | FEC, 4% | 300 | 2.63 | 5.8 μm | 138 | 2.65 |
| Embodiment 3 | 38% | EA, 50% | DMC, 12% | 6% | FEC, 4% | 300 | 2.63 | 5.8 μm | 138 | 2.65 |
| Embodiment 4 | 40% | EA, 50% | DMC, 10% | 6% | FEC, 4% | 300 | 2.63 | 5.8 μm | 138 | 2.65 |
| Embodiment 5 | 30% | EA, 50% | DMC, 20% | 2% | FEC, 4% | 300 | 2.63 | 5.8 μm | 138 | 2.65 |
| Embodiment 6 | 30% | EA, 50% | DMC, 20% | 3% | FEC, 4% | 300 | 2.63 | 5.8 μm | 138 | 2.65 |
| Embodiment 7 | 30% | EA, 50% | DMC, 20% | 8% | FEC, 4% | 300 | 2.63 | 5.8 μm | 138 | 2.65 |
| Embodiment 8 | 30% | EA, 50% | DMC, 20% | 10% | FEC, 4% | 300 | 2.63 | 5.8 μm | 138 | 2.65 |
| Embodiment 9 | 30% | EA, 50% | DMC, 20% | 6% | FEC, 0.3% | 300 | 2.63 | 5.8 μm | 138 | 2.65 |
| Embodiment 10 | 30% | EA, 50% | DMC, 20% | 6% | FEC, 1.5% | 300 | 2.63 | 5.8 μm | 138 | 2.65 |
| Embodiment 11 | 30% | EA, 50% | DMC, 20% | 6% | FEC, 3% | 300 | 2.63 | 5.8 μm | 138 | 2.65 |
| Embodiment 12 | 30% | EA, 50% | DMC, 20% | 6% | FEC, 5% | 300 | 2.63 | 5.8 μm | 138 | 2.65 |
| Embodiment 13 | 30% | EA, 50% | DMC, 20% | 6% | FEC, 6% | 300 | 2.63 | 5.8 μm | 138 | 2.65 |
| Embodiment 14 | 30% | EMC, 30% | DMC, 40% | 6% | FEC, 4% | 220 | 2.68 | 5.8 μm | 104 | 2.65 |
| Embodiment 15 | 30% | EA, 50% | DMC, 20% | 6% | FEC, 4% | 300 | 2.63 | 2.2 μm | 138 | 2.65 |
| Embodiment 16 | 30% | EA, 50% | DMC, 20% | 6% | FEC, 4% | 300 | 2.63 | 4.5 μm | 138 | 2.65 |
| Embodiment 17 | 30% | EA, 50% | DMC, 20% | 6% | FEC, 4% | 300 | 2.63 | 7.0 μm | 138 | 2.65 |
| Embodiment 18 | 30% | EA, 50% | DMC, 20% | 7% | FEC, 1.5% | 300 | 2.63 | 5.8 μm | 138 | 2.4 |
| Embodiment 19 | 30% | EA, 50% | DMC, 20% | 4% | FEC, 1.5% | 300 | 2.63 | 5.8 μm | 138 | 2.9 |
| Embodiment 20 | The difference from Embodiment 2 is the negative electrode plate. For details, refer to the text section | | | | | 300 | 2.63 | 5.8 μm | 138 | 2.65 |
| Comparative Example 1 | 30% | EA, 50% | DMC, 20% | 13% | FEC, 1.5% | 300 | 2.63 | 5.8 μm | 138 | 2.65 |

(continued)

| No. | Electrolyte solution | | | | | Single-side coating weight of positive electrode | Compaction density of positive electrode plate after full charge, $g/cm^3$ | Dv50 of first graphite | Single-side coating weight of negative electrode | Mass b/g of electrolyte solution at capacity 1 Ah |
|---|---|---|---|---|---|---|---|---|---|---|
| | First solvent | Type and content of second solvent | | First additive VC, content | Second additive, content | | | | | |
| | EC content | | | | | | | | | |
| Comparative Example 2 | 30% | EA, 50% | DMC, 20% | 0.50% | FEC, 1.5% | 300 | 2.63 | 5.8 μm | 138 | 2.65 |
| Comparative Example 3 | 30% | EA, 50% | DMC, 20% | 3% | FEC, 8% | 300 | 2.63 | 5.8 μm | 138 | 2.65 |
| Comparative Example 4 | 30% | EA, 50% | DMC, 20% | 6% | FEC, 0.1% | 300 | 2.63 | 5.8 μm | 138 | 2.65 |
| Comparative Example 5 | 15% | EA, 50% | DMC, 35% | 6% | FEC, 4% | 300 | 2.63 | 5.8 μm | 138 | 2.65 |

Table 2

| No. | Capacity retention rate after 1000 cycles at 60°C | Capacity retention rate after 1000 cycles at 30°C | Charging time T/min from 10% to 80% SOC |
|---|---|---|---|
| Embodiment 1 | 82.30% | 92.30% | 8.8 |
| Embodiment 2 | 83% | 93.80% | 8.7 |
| Embodiment 3 | 83.20% | 93.70% | 8.5 |
| Embodiment 4 | 82.80% | 93.40% | 8.6 |
| Embodiment 5 | 78.90% | 92.50% | 8.3 |
| Embodiment 6 | 79.70% | 92.70% | 8.4 |
| Embodiment 7 | 83.80% | 93.60% | 8.9 |
| Embodiment 8 | 84.10% | 91.50% | 9.3 |
| Embodiment 9 | 83.90% | 92.30% | 9.1 |
| Embodiment 10 | 83.50% | 92.60% | 9 |
| Embodiment 11 | 83.30% | 93.20% | 8.8 |
| Embodiment 12 | 82.50% | 93.50% | 8.60 |
| Embodiment 13 | 80.60% | 93.00% | 8.50 |
| Embodiment 14 | 83.70% | 92.90% | 9.30 |
| Embodiment 15 | 77.2% | 91.3% | 7.10 |
| Embodiment 16 | 79.40% | 92.20% | 8.20 |
| Embodiment 17 | 84.20% | 94.60% | 9.50 |
| Embodiment 18 | 83.60% | 92.30% | 9.1 |
| Embodiment 19 | 83.50% | 92.90% | 8.8 |
| Embodiment 20 | 82.6% | 93.50% | 9 |
| Comparative Example 1 | 85.10% | 85.20% | 9.7 |
| Comparative Example 2 | 45.80% | 88.90% | 9 |
| Comparative Example 3 | 72.50% | 90.20% | 8.1 |
| Comparative Example 4 | 74.70% | 90.70% | 9.3 |
| Comparative Example 5 | 71.50% | 90.30% | 9.1 |

As can be seen from Table 1 to Table 2, the content of the first additive is excessively high in Comparative Example 1, causing deterioration of the normal-temperature cycling performance of the battery. The content of the first additive is excessively low in Comparative Example 1, causing deterioration of the high-temperature cycling performance of the battery and long fast charge time, which indicates poor fast charge performance of the battery. The content of the second additive is excessively high in Comparative Example 3, causing deterioration of the high-temperature cycling performance of the battery. The content of the second additive is excessively low in Comparative Example 4, causing deterioration of the normal-temperature cycling performance of the battery. The content of the first solvent is excessively low in Comparative Example 5, causing deterioration of the stability of the electrolyte solution, which leads to a decrease in the conductivity as well as poor normal-temperature cycling performance and high-temperature cycling performance.

In the embodiments, the components and proportions thereof of the electrolyte solution are adjusted and cooperate with the negative electrode plate containing the first graphite having a small particle size, so that the obtained secondary battery can achieve balance among good fast charge performance, normal-temperature cycling performance, and high-temperature cycling performance. In Embodiment 14, the second solvents in the electrolyte solution are both a carbonate solvent, so the conductivity of the electrolyte solution is reduced. As a result, the single-side coating weights of the positive electrode plate and the negative electrode plate are reduced, so that the fast charge performance of the battery is improved.

The technical features in the above embodiments may be randomly combined. For concise description, not all possible combinations of the technical features in the above embodiments are described. However, provided that there is

no conflict in combinations of the technical features, the combinations of the technical features are considered as falling within the scope described in this specification.

The above embodiments only describe several implementations of the present application, and their description is specific and detailed, but cannot therefore be understood as a limitation to the patent claims. It should be noted that for a person of ordinary skill in the art, a plurality of transformations and improvements can also be made without departing from the idea of the present application. These transformations and improvements all fall within the scope of protection of the present application. Therefore, the scope of protection of the patent of the present application shall be subject to the appended claims.

## Claims

**1.** A secondary battery, comprising:

a positive electrode plate, the positive electrode plate comprising a positive electrode current collector and a positive electrode film layer, the positive electrode film layer being disposed on at least one side of the positive electrode current collector, and the positive electrode film layer comprising a positive electrode active material;
a negative electrode plate, the negative electrode plate comprising a negative electrode current collector and a negative electrode film layer, the negative electrode film layer being disposed on at least one side of the negative electrode current collector, the negative electrode film layer comprising a negative electrode active material, the negative electrode active material comprising first graphite, and a Dv50 particle size of the first graphite being 2.2 μm to 7.7 μm; and
an electrolyte solution, the electrolyte solution comprising an organic solvent and an organic additive, the organic solvent comprising a first solvent, the first solvent comprising cyclic carbonate, and based on a total mass of the organic solvent, a mass content of the first solvent being 25% to 40%; and the organic additive comprising a first additive and a second additive, the first additive comprising vinylene carbonate, the second additive comprising an ethylene carbonate derivative, and based on a total mass of the electrolyte solution, a mass percentage of the first additive in the electrolyte solution being 2% to 10%, and a mass percentage of the second additive in the electrolyte solution being 0.3% to 6%.

**2.** The secondary battery according to claim 1, wherein the ethylene carbonate derivative has the following structure:

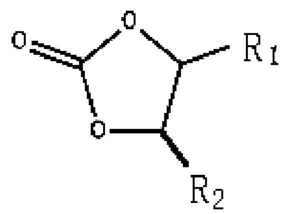
,

where $R_1$ and $R_2$ each independently comprise any one of hydrogen, halogen, C1-C5 alkyl, and C1-C5 haloalkyl, and $R_1$ and $R_2$ are not both hydrogen.

**3.** The secondary battery according to any one of claims 1 to 2, wherein the ethylene carbonate derivative comprises at least one of fluoroethylene carbonate, difluoroethylene carbonate, and trifluoromethyl ethylene carbonate.

**4.** The secondary battery according to any one of claims 1 to 3, wherein the cyclic carbonate comprises at least one of ethylene carbonate and propylene carbonate.

**5.** The secondary battery according to any one of claims 1 to 4, wherein based on the total mass of the organic solvent, the mass content of the first solvent is 30% to 40%.

**6.** The secondary battery according to any one of claims 1 to 5, wherein based on the total mass of the electrolyte solution, a mass content of the first additive is 3% to 8%, and/or a mass content of the second additive is 1.5% to 5%.

**7.** The secondary battery according to any one of claims 1 to 6, wherein a total mass content of the first additive and the second additive in the electrolyte solution is 3% to 12%, optionally 3.5% to 9%.

**8.** The secondary battery according to any one of claims 1 to 7, wherein a mass of the electrolyte solution at unit battery rated capacity 1 Ah of the secondary battery is 2.2 g to 2.95 g.

**9.** The secondary battery according to claim 8, wherein the mass of the electrolyte solution at unit battery rated capacity 1 Ah of the secondary battery is 2.2 g to 2.65 g, and the total mass content of the first additive and the second additive in the electrolyte solution is 5% to 9%; or
the mass of the electrolyte solution at unit battery rated capacity 1 Ah of the secondary battery is > 2.65 g and ≤ 2.95 g, and the total mass content of the first additive and the second additive in the electrolyte solution is 3.5% to 6.5%.

**10.** The secondary battery according to any one of claims 1 to 9, wherein a powder compaction density of the positive electrode active material at 30000 N is ≥ 2.43 g/cm$^3$, optionally 2.48 g/cm$^3$ to 2.85 g/cm$^3$.

**11.** The secondary battery according to claim 10, wherein the positive electrode active material comprises at least one of lithium-containing phosphate with an olivine structure and derivatives thereof.

**12.** The secondary battery according to claim 11, wherein the positive electrode active material comprises:

a core, comprising at least one of lithium-containing phosphate with an olivine structure and derivatives thereof; and
an ion conducting layer, the ion conducting layer coating a surface of the core, and the lithium ion conducting layer comprising at least one of Fe, C, Ti, Zr, Hf, Ge, and Sn.

**13.** The secondary battery according to claim 11 or 12, wherein the lithium-containing phosphate with an olivine structure and the derivatives thereof comprise compounds with a general formula $Li_{x1}Al_{y1}M1_{a1}M2_{b1}P_{1-c1}X_{c1}Q1_{z1}$, wherein $0.5 \le x1 \le 1.3$, $0 \le y1 \le 1.3$, and $0.9 \le x1+y1 \le 1.3$; $0.9 \le a1 \le 1.5$, $0 \le b1 \le 0.5$, and $0.9 \le a1+b1 \le 1.5$; $0 \le c1 \le 0.5$; $3 \le z1 \le 5$; A1 comprises at least one of Na, K, and Mg; M1 comprises at least one of Mn, Fe, Co, and Ni; M2 comprises at least one of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X comprises at least one of S, Si, Cl, B, C, N, and P; and Q1 comprises at least one of O and F.

**14.** The secondary battery according to claim 13, wherein the lithium-containing phosphate with an olivine structure and the derivatives thereof comprise at least one of lithium iron phosphate, lithium manganese phosphate, lithium nickel phosphate, and lithium cobalt phosphate.

**15.** The secondary battery according to claim 12, wherein the ion conducting layer comprises a fast ion conductor with a chemical formula $Li_{3-b}Fe_{2-b}M3_b(PO_m)_n$, where M3 comprises at least one of Ti, Zr, Hf, Ge, and Sn having a valency of +4, $0 \le b \le 1$, $3 \le m \le 5$, and $2 \le n \le 4$.

**16.** The secondary battery according to claim 15, wherein the fast ion conductor comprises at least one of lithium iron titanium phosphate, lithium iron zirconium phosphate, and lithium iron tin phosphate.

**17.** The secondary battery according to any one of claims 1 to 16, wherein at least one of the following conditions is met:

(1) a compaction density of the positive electrode plate is 2.5 g/cm$^3$ to 2.8 g/cm$^3$;
(2) a mass percentage of carbon in the positive electrode active material is 1% to 2%;
(3) a powder resistivity range of the positive electrode active material is $R \le 20\ \Omega\cdot cm$, optionally $R \le 11\ \Omega\cdot cm$; and
(4) a volume average particle size of the positive electrode active material meets: $1\ \mu m \le Dv50 \le 2\ \mu m$, and $0.4\ \mu m \le Dv10 \le 0.7\ \mu m$.

**18.** The secondary battery according to any one of claims 1 to 17, wherein the positive electrode film layer further comprises a lithium supplement, the lithium supplement comprising at least one of a ternary lithium supplementing material, lithium phosphate, dilithium hydrogen phosphate, lithium sulfate, lithium sulfite, lithium molybdate, lithium nickelate, lithium ferrite, lithium oxalate, lithium titanate, lithium tetraborate, lithium metasilicate, lithium metamanganate, lithium tartrate, and lithium citrate.

**19.** The secondary battery according to claim 18, wherein the ternary lithium supplementing material comprises $Li_{x2}A2_{y2}Ni_{a2}Co_{b2}Mn_{c2}M4_{(1-a2-b2-c2)}Q2_{z2}$, where $0 < x2 \le 2.1$, and $0 \le y2 \le 2.1$; $0 \le a2 \le 1$, $0 \le b2 \le 1$, $0 \le c2 \le 1$, and $0.1 \le a2+b2+c2 \le 1$; $1.8 \le z2 \le 3.5$; A2 comprises at least one of Na, K, and Mg; M4 comprises at least one of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Q2 comprises at

least one of O and F.

**20.** The secondary battery according to any one of claims 1 to 19, wherein the positive electrode plate further comprises a positive electrode conductive layer, the positive electrode conductive layer being disposed between the positive electrode current collector and the positive electrode film layer on at least one side, the positive electrode conductive layer comprising a conductive agent, and the conductive agent comprising at least one of superconducting carbon, conductive graphite, acetylene black, carbon black, Ketjen black, carbon dots, carbon nanotubes, graphene, and carbon nanofibers.

**21.** The secondary battery according to claim 20, wherein a thickness of the positive electrode conductive layer is 0.5 μm to 2 μm.

**22.** The secondary battery according to claim 20 or 21, wherein the positive electrode conductive layer comprises a binder, the binder comprising at least one of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, polyacrylic acid, and fluorinated acrylate resin.

**23.** The secondary battery according to claim 20, wherein in the positive electrode conductive layer, a mass content of the conductive agent is 30% to 50%, and a mass content of the binder is 50% to 70%.

**24.** The secondary battery according to any one of claims 1 to 23, wherein a compaction density of the negative electrode plate after the secondary battery is charged to 100% SOC at a charging rate of 0.33 C is 1.15 $g/cm^3$ to 1.46 $g/cm^3$, optionally 1.15 $g/cm^3$ to 1.36 $g/cm^3$.

**25.** The secondary battery according to claim 24, wherein the compaction density of the negative electrode plate after the secondary battery is charged to 100% SOC at the charging rate of 0.33 C is 1.15 $g/cm^3$ to 1.26 $g/cm^3$, and the mass content of the first additive in the electrolyte solution is 3% to 8%.

**26.** The secondary battery according to claim 25, wherein at least one of the following conditions is met:

(1) the mass content of the second additive in the electrolyte solution is 0.5% to 3%; and
(2) the mass content of the first solvent in the organic solvent is 30% to 40%.

**27.** The secondary battery according to claim 24, wherein the compaction density of the negative electrode plate after the secondary battery is charged to 100% SOC at the charging rate of 0.33 C is > 1.26 $g/cm^3$ and ≤ 1.36 $g/cm^3$, and the mass content of the first additive in the electrolyte solution is 2.5% to 6.5%.

**28.** The secondary battery according to claim 27, wherein at least one of the following conditions is met:

(1) the mass content of the second additive in the electrolyte solution is 1% to 4%; and
(2) the mass content of the first solvent in the organic solvent is 25% to 38%.

**29.** The secondary battery according to any one of claims 1 to 28, wherein the electrolyte solution further comprises a second solvent, the second solvent comprising at least one of linear carbonate, carboxylate, ether, nitrile, and sulfone.

**30.** The secondary battery according to claim 29, wherein the second solvent comprises carboxylate; and optionally, the carboxylate comprises at least one of methyl formate, methyl acetate, ethyl acetate, propyl acetate, methyl propionate, ethyl propionate, propyl propionate, and methyl butyrate.

**31.** The secondary battery according to claim 32, wherein a charging time of the secondary battery from 10% SOC to 80% SOC at 30°C is 6 min to 15 min, a mass content of the carboxylate in the organic solvent is 20% to 75%, and the total mass content of the first additive and the second additive in the electrolyte solution is 2% to 9%.

**32.** The secondary battery according to claim 31, wherein in the electrolyte solution, the mass content of the first additive is 1.5% to 7%, and the mass content of the second additive is 0.5% to 4%.

**33.** The secondary battery according to any one of claims 1 to 32, wherein the electrolyte solution comprises a lithium salt, the lithium salt comprising at least one of lithium hexafluorophosphate, lithium tetrafluoroborate, lithium perchlorate,

lithium hexafluoroarsenate, fluorosulfonyl imide salt, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

**34.** The secondary battery according to claim 33, wherein a concentration of the lithium salt in the electrolyte solution is 0.7 mol/L to 1.5 mol/L.

**35.** The secondary battery according to claim 33 or 34, wherein the lithium salt comprises at least one of LiFSI and $LiPF_6$, and the lithium salt meets at least one of the following conditions:

(1) a concentration of the LiFSI is 0.2 mol/L to 0.5 mol/L;
(2) a concentration of the $LiPF_6$ is 0.5 mol/L to 1.3 mol/L; and
(3) the lithium salt comprises LiFSI and $LiPF_6$, and a concentration ratio of the LiFSI to the $LiPF_6$ is (2 to 5):10.

**36.** The secondary battery according to any one of claims 1 to 35, wherein the negative electrode plate further comprises a negative electrode conductive layer, the negative electrode conductive layer being disposed between the negative electrode current collector and the negative electrode film layer on at least one side, the negative electrode conductive layer comprising a conductive agent, and the conductive agent comprising at least one of superconducting carbon, conductive graphite, acetylene black, carbon black, Ketjen black, carbon dots, carbon nanotubes, graphene, and carbon nanofibers.

**37.** The secondary battery according to claim 36, wherein a thickness of the negative electrode conductive layer is 0.5 $\mu$m to 2 $\mu$m.

**38.** The secondary battery according to claim 36 or 37, wherein the negative electrode conductive layer comprises a binder, the binder comprising at least one of a styrene-butadiene rubber, water-soluble unsaturated resin, waterborne acrylic resin, polyvinyl alcohol, sodium alginate, and carboxymethyl chitosan.

**39.** The secondary battery according to claim 38, wherein in the negative electrode conductive layer, a mass content of the conductive agent is 20% to 40%, and a mass content of the binder is 60% to 80%.

**40.** The secondary battery according to any one of claims 1 to 39, wherein the negative electrode film layer comprises at least one negative electrode active layer, the at least one negative electrode active layer comprising the first graphite.

**41.** The secondary battery according to claim 40, wherein the negative electrode film layer comprises only one negative electrode active layer, the negative electrode active layer containing the first graphite and second graphite, the Dv50 particle size of the first graphite being 4.2 $\mu$m to 7.2 $\mu$m, and a Dv50 particle size of the second graphite being 7.8 $\mu$m to 14.8 $\mu$m.

**42.** The secondary battery according to claim 41, where a mass ratio of the first graphite to the second graphite is 2:8 to 6:4, optionally 3:7 to 5:5.

**43.** The secondary battery according to claim 41 or 42, wherein a mass content of the first graphite in the negative electrode active layer is $\geq$ 20% and < 50%, and the total mass content of the first additive and the second additive in the electrolyte solution is 3% to 8%; or
the mass content of the first graphite in the negative electrode active layer is 50% to 70%, and the total mass content of the first additive and the second additive in the electrolyte solution is 4% to 10%.

**44.** The secondary battery according to claim 40, wherein the negative electrode film layer comprises a first negative electrode active layer and a second negative electrode active layer that are sequentially stacked on a same side of the negative electrode current collector, the first negative electrode active layer comprising at least one of artificial graphite and natural graphite, the second negative electrode active layer comprising the first graphite and third graphite, the first graphite comprising artificial graphite, and a Dv50 particle size of the third graphite being 7.8 $\mu$m to 14.8 $\mu$m.

**45.** The secondary battery according to claim 44, wherein in the second negative electrode active layer, a mass ratio of the first graphite to the third graphite is 2:8 to 8:2, optionally 3:7 to 7:3.

**46.** The secondary battery according to claim 44 or 45, wherein at least one of the following conditions is met:

(1) a ratio of a total amount of the negative electrode active material in the second negative electrode active layer to a total amount of the negative electrode active material in the first negative electrode active material layer is 3:7 to 7:3, optionally 4:6 to 6:4;
(2) the mass content of the first graphite in the second negative electrode active layer is 30% to 70%; optionally, the mass content of the first graphite in the second negative electrode active layer is ≥ 20% and < 50%, and the total mass content of the first additive and the second additive in the electrolyte solution is 3% to 7%; or the mass content of the first graphite in the second negative electrode active layer is 50% to 70%, and the total mass content of the first additive and the second additive in the electrolyte solution is 3.5% to 8%; and
(3) the Dv50 particle size of the graphite in the first negative electrode active layer is equal to or greater than the Dv50 particle size of the first graphite in the second negative electrode active layer; optionally, the Dv50 particle size of the graphite in the first negative electrode active layer is 5.8 μm to 12.8 μm, optionally 7.8 μm to 12.8 μm; and optionally, the Dv50 particle size of the graphite in the second negative electrode active layer is 2.2 μm to 7.7 μm, optionally 4.2 μm to 7.2 μm.

**47.** The secondary battery according to any one of claims 44 to 46, wherein the artificial graphite comprises graphite body particles and a coating layer, the graphite body particle comprising a secondary particle formed by aggregation of a plurality of primary particles, the coating layer coating a surface of the body particle, and the coating layer comprising amorphous carbon.

**48.** The secondary battery according to claim 47, wherein at least one of the following conditions is met:

(1) based on a total mass of the artificial graphite, a mass content of the amorphous carbon is 2% to 5%; and
(2) a powder resistivity of the artificial graphite is ≤ 0.04 Ω•cm.

**49.** The secondary battery according to any one of claims 1 to 48, wherein a gravimetric capacity of the first graphite in a button battery charged at a rate of 0.1 C is ≥ 350 mAh/g, optionally 350 mAh/g to 440 mAh/g.

**50.** The secondary battery according to any one of claims 1 to 49, wherein the negative electrode active material further comprises a silicon-based material, the silicon-based material comprising at least one of silicon-oxygen compounds and silicon-carbon composites; and in the negative electrode active material, a mass content of silicon in the silicon-based material is 0.3% to 10%, optionally 1% to 6%.

**51.** The secondary battery according to any one of claims 1 to 50, wherein a separator comprises a porous base film and a functional layer disposed on at least one side of the porous base film.

**52.** The secondary battery according to claim 51, wherein at least one of the following conditions is met:

(1) a thickness of the porous base film is ≤ 12 μm, optionally ≤ 9 μm; and
(2) a porosity of the porous base film is 20% to 70%, optionally 35% to 60%.

**53.** The secondary battery according to claim 51 or 52, wherein the separator comprises a first functional layer and a second functional layer that are disposed on two sides of the porous base film, the first functional layer comprising first inorganic particles, the second functional layer comprising composite particles, the composite particles comprising second inorganic particles and non-fluoropolymer particles, and the second inorganic particles being attached to a surface of the non-fluoropolymer particles and/or dispersed inside the non-fluoropolymer particles.

**54.** The secondary battery according to claim 53, wherein at least one of the following conditions is met:

(1) the non-fluoropolymer particles comprise acrylate polymer particles; and
(2) the first functional layer is located between the negative electrode plate and the porous base film, and the second functional layer is located between the positive electrode plate and the porous base film.

**55.** A power consuming apparatus, comprising the secondary battery according to any one of claims 1 to 54.

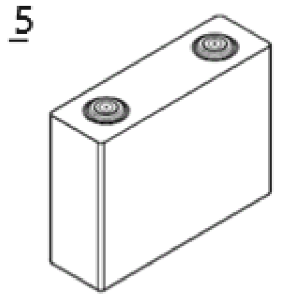


FIG. 1

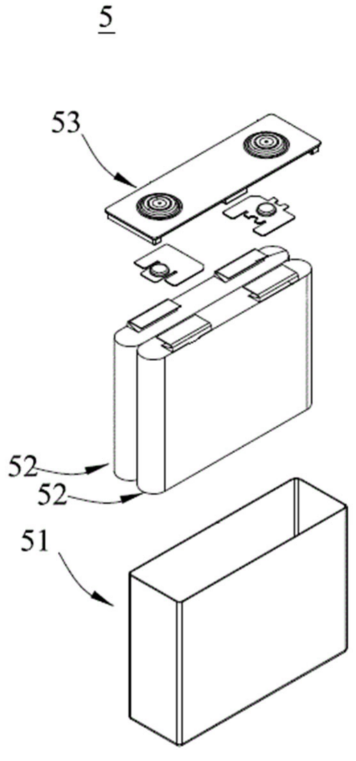


FIG. 2

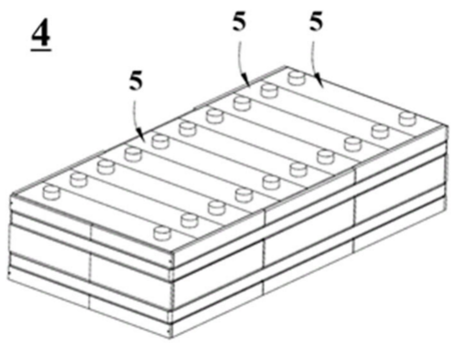


FIG. 3

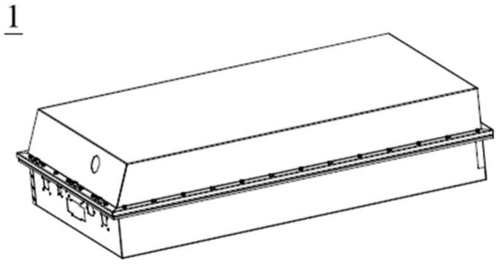


FIG. 4

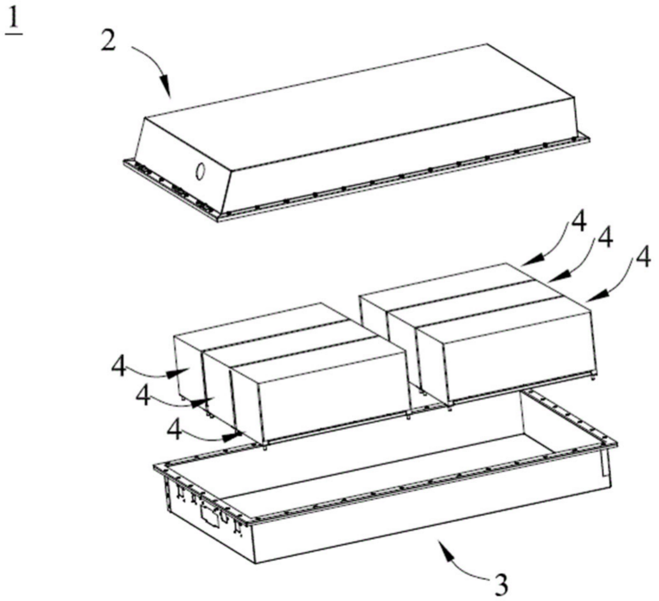


FIG. 5

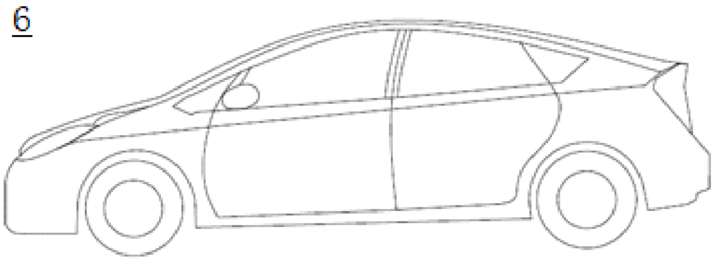


FIG. 6

**INTERNATIONAL SEARCH REPORT**

International application No.
**PCT/CN2024/102539**

**A. CLASSIFICATION OF SUBJECT MATTER**

H01M4/133(2010.01)i； H01M10/0525(2010.01)i

According to International Patent Classification (IPC) or to both national classification and IPC

**B. FIELDS SEARCHED**

Minimum documentation searched (classification system followed by classification symbols)

IPC： H01M4/-； H01M10/-

Documentation searched other than minimum documentation to the extent that such documents are included in the fields searched

Electronic data base consulted during the international search (name of data base and, where practicable, search terms used)

CNABS, CNTXT, ENTXTC, VEN, WPABSC, CNKI, ISI_Web of Science: 电池, 正极, 负极, 电解液, 环状碳酸酯, 碳酸亚乙烯酯, 碳酸乙烯酯, 石墨, 粒径, battery, positive electrode, negative electrode, electrolytic solution, cyclic carbonate, vinylene carbonate, ethylene carbonate, graphite, aparticle size

**C. DOCUMENTS CONSIDERED TO BE RELEVANT**

| Category* | Citation of document, with indication, where appropriate, of the relevant passages | Relevant to claim No. |
|---|---|---|
| A | WO 2021037266 A1 (FARASIS ENERGY (GANZHOU) CO., LTD.) 04 March 2021 (2021-03-04) embodiment 2 | 1-55 |
| A | CN 116941092 A (CONTEMPORARY AMPEREX TECHNOLOGY CO., LTD.) 24 October 2023 (2023-10-24) entire description | 1-55 |
| A | CN 117878410 A (CONTEMPORARY AMPEREX TECHNOLOGY CO., LTD.) 12 April 2024 (2024-04-12) entire description | 1-55 |
| A | CN 118198469 A (CONTEMPORARY AMPEREX TECHNOLOGY CO., LTD.) 14 June 2024 (2024-06-14) entire description | 1-55 |
| A | CN 118198487 A (CONTEMPORARY AMPEREX TECHNOLOGY CO., LTD.) 14 June 2024 (2024-06-14) entire description | 1-55 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 February 2025** | **05 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2024/102539**

**C. DOCUMENTS CONSIDERED TO BE RELEVANT**

| Category* | Citation of document, with indication, where appropriate, of the relevant passages | Relevant to claim No. |
|---|---|---|
| A | WO 2024082110 A1 (CONTEMPORARY AMPEREX TECHNOLOGY CO., LTD.) 25 April 2024 (2024-04-25)<br>entire description | 1-55 |

Form PCT/ISA/210 (second sheet) (July 2022)

**INTERNATIONAL SEARCH REPORT**
**Information on patent family members**

International application No.
**PCT/CN2024/102539**

| Patent document cited in search report | Publication date (day/month/year) | Patent family member(s) | Publication date (day/month/year) |
|---|---|---|---|
| WO 2021037266 A1 | 04 March 2021 | None | |
| CN 116941092 A | 24 October 2023 | None | |
| CN 117878410 A | 12 April 2024 | None | |
| CN 118198469 A | 14 June 2024 | None | |
| CN 118198487 A | 14 June 2024 | None | |
| WO 2024082110 A1 | 25 April 2024 | KR 20240172209 A | 09 December 2024 |
| | | EP 4507054 A1 | 12 February 2025 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 363632018 T